# FASCICULE DE BREVET EUROPEEN

(11) **EP 0 447 307 B1**
(45) Date de publication et mention de la délivrance du brevet: **11.05.1994**
(21) Numéro de dépôt: 91400654.9
(22) Date de dépôt: 08.03.1991
(51) Int. Cl.: F16F 9/50, F16F 13/00, B64C 27/51

(54) **Amortisseur hydraulique et contre-fiche de rappel élastique comportant un tel amortisseur**
Hydraulischer Dämpfer und aus einem solchen Dämpfer bestehende elastohydraulische Rückholvorrichtung
Hydraulic damper and elastohydraulic return device composed of such a damper

(30) Priorité: 13.03.1990 FR 9003193
(43) Date de publication de la demande: 18.09.1991
(73) Titulaire: AEROSPATIALE Société Nationale Industrielle, 75781 Paris Cédex 16 (FR)
(72) Inventeur: Aubry, Jacques Antoine, F-13480 Cabries (FR)
(74) Mandataire: Phélip, Bruno

(56) Documents cités:
- EP-A- 0 334 716
- FR-A- 1 326 586
- FR-A- 2 592 696
- GB-A- 1 061 567

## Description

La présente invention est relative à un amortisseur hydraulique, en particulier du type à amortissement linéaire par laminage d'un fluide, de préférence de viscosité élevée ainsi qu'à une contre-fiche de rappel élastique comportant un tel amortisseur, et plus précisément du type élasto-hydraulique à amortissement incorporé.

Plus particulièrement, l'amortisseur proposé par l'invention a une structure qui lui permet de régler de lui-même son amortissement selon une loi optimisée fonction du seul déplacement relatif amorti. La contre-fiche proposée par l'invention est, quant à elle, notamment destinée à l'équipement des rotors d'aérodynes à voilure tournante, et plus spécialement des rotors d'hélicoptères.

Des amortisseurs asservis sont déjà connus depuis longtemps et utilisés notamment dans le domaine de l'aéronautique, ainsi que cela ressort, par exemple, du document FR-950.592,considéré comme état de la technique et relatif à un amortisseur auto-réglable pour roue avant des trains tricycles d'avions.

Le dispositif proposé dans ce document comporte essentiellement un cylindre principal, dans lequel un piston est monté mobile en translation et avec étanchéité dans ledit cylindre. La course de ce piston est amortie par la compression d'un liquide, tel que de l'huile, que le mouvement dudit piston fait passer d'une chambre à une autre du cylindre principal à travers un diaphragme. Ce diaphragme est associé à un doigt de réglage, qui obture plus ou moins, selon son positionnement, l'orifice dudit diaphragme, et régle ainsi la section d'ouverture de celui-ci. Le positionnement de ce doigt de réglage est commandé par les actions antagonistes d'un ressort, repoussant ledit doigt de réglage vers une position d'ouverture maximum de l'orifice dudit diaphragme, et de la pression d'un fluide dérivé du circuit d'alimentation des freins de la roue.

Grâce à une telle structure, le réglage de l'amortisseur est directement subordonné à la pression de freinage développée, par exemple lors d'un atterrissage. Cependant, il faut noter que si un tel dispositif permet effectivement un réglage automatique de l'amortissement, ce réglage n'est pas directement commandé par la course d'amortissement, mais par un élément ou paramètre extérieur à l'amortisseur.

On connait encore, par le brevet FR-1.003.247 un amortisseur comportant deux chambres cylindriques remplies chacune, au moins partiellement, par un liquide tel que de l'huile passant de l'une à l'autre des deux chambres, sous l'effet du mouvement d'un piston d'amortissement, par un orifice d'amortissement. Cet orifice d'amortissement est associé à un clapet destiné à l'obturer, ledit clapet étant actionné par la pression d'un fluide extérieur.

Un tel dispositif permet aussi de réaliser un asservissement de l'amortisseur. La loi d'amortissement est, néanmoins, là encore, fonction d'un paramètre extérieur à l'amortisseur et non pas directement fonction de la course du piston d'amortissement dans son cylindre principal.

Le brevet FR-1.165.327 fait quant à lui état d'un système de réglage pour des amortisseurs de suspension comportant essentiellement dans un corps principal, un piston principal monté coulissant. Ledit piston est traversé par des passages de communication entre les deux chambres qu'il délimite dans le corps principal. Ces passages sont eux-mêmes associés à des clapets les obturant respectivement lors des phases d'expansion ou de refoulement. Ce piston principal est monté sur une tige d'actionnement associée à au moins deux éléments complémentaires délimitant ensemble une chambre secondaire à volume variable. L'un de ces éléments est fixe par rapport à ladite tige. L'autre peut coulisser par rapport à celle-ci et est destiné à comprimer un ressort monté autour de ladite tige, ledit ressort agissant sur l'un au moins desdits clapets et le repoussant sur son siège. Dans cette chambre secondaire débouche un canal, qui s'étend dans la tige et qui alimente ladite chambre secondaire en un fluide de commande, dont la pression assure le réglage de la charge du ou des clapets, et donc de l'amortissement.

Cependant, le réglage ainsi obtenu est là aussi un réglage extérieur, commandé à distance, sur lequel n'influent aucunement les positions respectives du piston d'amortissement et du corps principal. En outre, il faut noter que dans un tel dispositif, le fluide de commande n'agit pas directement sur les clapets auxquels il est associé, mais agit sur eux par l'intermédiaire de multiples pièces qui ajoutent à la complexité du montage et du fonctionnement du dispositif.

Il faut encore citer, comme exemple d'amortisseur asservi extérieurement, l'amortisseur à huile pour véhicule dont fait état le document FR-1.194.294, dont le fonctionnement est sensiblement similaire à celui des amortisseurs précédemment décrits, la section des passages d'étranglement de l'huile étant contrôlée par des clapets de réglage dont le positionnement est commandé par un organe extérieur.

Le brevet FR-1.323.746 a pour objet, quant à lui, un amortisseur dont l'amortissement est directement asservi à l'intensité des oscillations auxquelles ledit amortisseur est soumis. Cet amortisseur comporte de façon classique un piston principal d'amortissement mobile dans un cylindre principal d'amortisseur, ledit piston étant traversé dans son épaisseur par des passages principaux permettant l'écoulement du fluide entre les deux chambres de travail délimitées par ledit piston dans le cylindre principal. La tige sur laquelle est monté le piston comporte en son intérieur un alésage servant de logement à un tiroir coulissant. Le corps dudit tiroir est percé axialement par un orifice central, les deux chambres auxiliaires délimitées dans ledit alésage par ledit tiroir étant chacune respectivement mise en communication, par des passages auxiliaires traversant les parois dudit alésage, avec l'une des deux chambres de travail de chaque côté du piston principal. La position dudit tiroir dans son alésage commande les sections d'ouverture desdits passages et donc l'écoulement du fluide d'amortissement d'une chambre de travail à l'autre, par l'intermédiaire des chambres auxiliaires.

Une telle structure permet à l'amortisseur de s'adapter de lui-même aux contraintes auxquelles il est soumis. Cependant, la loi d'amortissement réalisée dépend des pressions relatives dans les deux chambres de travail et non directement des positions respectives du piston d'amortissement et du cylindre principal. L'amortissement peut notamment prendre des intensités différentes pour une même position relative du piston d'amortissement et du cylindre principal. De plus, la loi d'amortissement est influencée par la section des passages auxiliaires qui varie selon une friction décroissante de la perte de charge au niveau du tiroir coulissant, sans que cette perte de charge ne commande de variation de la section d'écoulement par les passages principaux de l'amortisseur.

L'utilisation d'un clapet à tiroir pour réaliser l'écrêtage des pressions de fonctionnement d'un amortisseur est encore décrite dans la demande FR-2.597.952, qui fait état, quant à elle, de l'utilisation d'un tel clapet tiroir pour ouvrir un passage auxiliaire de très grande section lorsque la section de passage des orifices d'étranglement principaux de l'amortisseur s'avère insuffisante pour empêcher des variations critiques de pression dans l'amortisseur.

Quant aux contre-fiches, des contre-fiches de rappel élastique à amortissement incorporé, de type hydro-élastique, ont déjà été décrites, notamment, dans les demandes de brevet de la demanderesse FR-2.592.696 et FR-2.629.163. De telles contre-fiches sont notamment destinées, sur des rotors sustentateurs d'hélicoptère dont le moyeu est du type articulé, à l'amortissement des oscillations angulaires des pales dans le plan de rotation du rotor (amortissement en traînée), grâce à un dispositif d'amortissement hydraulique. Simultanément, ces contre-fiches assurent un rappel élastique énergique des pales en traînée, par déformation d'une masse de matériau souple.

De façon classique, de telles contre-fiches comportent essentiellement deux organes rigides munis chacun de moyens d'articulation destinés à relier l'un des organes rigides à une première pièce, telle qu'une pale ou un organe de liaison de ladite pale à un moyen de rotor, et l'autre organe rigide à une seconde pièce, telle que le moyeu de rotor. Ces contre-fiches comportent aussi au moins un organe de rappel élastique comprenant une masse de matériau déformable solidaire des deux organes rigides et destiné à se déformer lorsque lesdits organes rigides sont déplacés l'un par rapport à l'autre, et à exercer sur lesdits organes rigides une action de rappel élastique tendant à les ramener dans une position relative initiale. Elles sont, en outre, munies d'au moins un amortisseur hydraulique, comprenant deux chambres de travail à volume variable en sens opposé, qui contiennent un fluide hydraulique relativement visqueux destiné à passer de l'une à l'autre desdites chambres par au moins un passage étranglé de communication entre lesdites chambres de travail, lorsque lesdits organes rigides sont déplacés l'un par rapport à l'autre, afin de produire un effet d'amortissement du déplacement relatif desdits organes rigides.

Un but de l'invention est de proposer un amortisseur permettant de réaliser une loi d'amortissement optimisée, directement fonction des déplacements relatifs amortis. L'invention propose notamment pour ce faire un dispositif permettant un pilotage de la section d'ouverture d'au moins un passage étranglé de l'amortisseur, par le fluide hydraulique d'un deuxième amortisseur sensiblement intégré à l'amortisseur principal, le déplacement relatif des éléments de ce deuxième amortisseur étant directement commandé par la course d'amortissement de l'amortisseur principal.

Un tel amortisseur est plus particulièrement, mais non exclusivement, adapté pour des contre-fiches du type précité, sur lesquelles il est destiné à réaliser une loi d'amortissement optimisé avec des gradients d'amortissement différents suivant la valeur des déplacements dynamiques des deux organes avec lesquels chaque contre-fiche est montée.

Un premier objet de l'invention est donc un amortisseur hydraulique comportant, dans un corps principal, deux chambres de travail à volume variable en sens opposé, lesdites chambres de travail contenant un fluide visqueux principal destiné à passer de l'une à l'autre par au moins un passage de communication étranglé, sous l'effet de la poussée d'un piston d'amortissement se déplaçant dans ledit corps, la section d'ouverture d'au moins un passage de communication étant commandée par le positionnement, par rapport audit passage, d'un clapet de laminage sur lequel agit un fluide de commande, cet amortisseur hydraulique étant caractérisé en ce que le fluide de commande est contenu principalement dans au moins une chambre secondaire délimitée dans un cylindre secondaire, par un piston de commande monté coulissant dans ledit cylindre, ladite chambre secondaire étant associée à un canal de transport du fluide de commande de ladite chambre secondaire jusqu'au clapet de laminage, sous l'action du piston de commande, ledit cylindre secondaire et ledit piston de commande étant solidaires l'un du corps principal, l'autre du piston d'amortissement.

Avantageusement, le piston de commande est solidaire du corps principal, le cylindre secondaire étant solidaire du piston d'amortissement. Le fluide de commande peut être contenu principalement dans deux chambres secondaires délimitées, dans le cylindre secondaire, par le piston de commande monté coulissant dans ledit cylindre. On peut ainsi totalement intégrer le dispositif de pilotage des clapets de laminage dans l'architecture générale de l'amortisseur.

Dans un mode de réalisation avantageux, l'amortisseur comporte, dans son corps principal, un cylindre d'amortissement dans lequel les deux chambres de travail sont délimitées par le piston d'amortissement, ledit piston d'amortissement étant monté sur une tige mobile principale traversant l'une au moins des chambres de travail, le cylindre secondaire s'étendant au moins partiellement longitudinalement dans la tige mobile principale, le piston de commande étant monté sur une tige secondaire mobile en translation longitudinale à l'intérieur dudit cylindre secondaire et solidaire du corps principal. Il peut aussi comporter un dispositif de compensation des dilatations thermiques du fluide hydraulique et/ou des variations des volumes contenant ledit fluide, comprenant au moins une chambre de compensation associée à un circuit de compensation logé au moins partiellement dans la tige mobile principale, la tige mobile secondaire coulissant au moins partiellement à l'intérieur de la tige mobile principale, dans le circuit de compensation. Le circuit de compensation peut s'étendre partiellement dans la tige mobile secondaire et déboucher de ladite tige mobile secondaire dans la partie dudit circuit de compensation, qui se trouve à l'intérieur de la tige mobile principale.

De façon avantageuse encore, au moins une chambre secondaire communique par un canal annexe avec le circuit de compensation, ce qui permet l'absorption dans la chambre de compensation des dilatations thermiques du fluide de commande qui est alors le même fluide que le fluide visqueux de l'amortisseur. Le piston de commande peut être notamment monté dans le cylindre secondaire avec un jeu de laminage, le canal annexe étant disposé radialement dans ledit piston de commande et permettant la communication de chacune des deux chambres secondaires avec la partie du circuit de compensation qui s'étend dans la tige mobile secondaire.

De façon préférentielle, la tige mobile secondaire s'étend dans une première chambre de travail à partir du corps principal, jusque dans la partie du circuit de compensation qui est située dans la tige mobile principale, en traversant le cylindre secondaire, la tige mobile principale s'étendant au-delà du piston d'amortissement jusque dans la chambre de compensation, en traversant la deuxième chambre de travail, la partie du circuit de compensation logée dans ladite tige mobile principale débouchant dans ladite chambre de compensation.

L'amortisseur peut notamment comporter une chambre auxiliaire reliée à la chambre de compensation par au moins un canal de compensation, les chambres de travail étant disposées entre ladite chambre de compensation et la chambre auxiliaire, ladite chambre auxiliaire étant traversée par la tige mobile secondaire. Cette chambre auxiliaire peut être traversée, au moins partiellement, par la tige mobile principale.

Dans un mode de réalisation avantageux, une des extrémités de la tige mobile principale se déplace dans ladite chambre auxiliaire, le circuit de compensation s'étendant dans la tige mobile secondaire et dans la tige mobile principale pour déboucher vers une de ses extrémités, de la tige mobile secondaire dans la chambre auxiliaire, et, vers son autre extrémité, de la tige mobile principale dans la chambre de compensation. La chambre de compensation peut être notamment délimitée intérieurement au moins partiellement par une paroi souple en soufflet.

Dans un autre mode de réalisation également avantageux, la tige mobile principale traverse totalement la chambre auxiliaire, un canal de compensation s'étendant dans le corps principal. La chambre auxiliaire peut être comprise entre une chambre de travail et une chambre de gavage dans laquelle se déplace l'une des extrémités de la tige mobile principale, au moins une paroi séparant ladite chambre auxiliaire et ladite chambre de gavage, ladite paroi étant traversée par un orifice de communication étranglé. La chambre de gavage peut être traversée par la tige mobile secondaire.

Préférentiellement encore, chacune des deux chambres secondaires est associée par un canal de transport à un clapet de laminage. L'amortisseur peut notamment comporter, entre les deux chambres de travail, deux passages de communication étranglés et deux clapets de laminage commandant chacun respectivement par son positionnement la section d'ouverture de chacun desdits passages de communication, chacun de ces deux clapets étant associé respectivement à l'une des chambres secondaires.

Avantageusement, un clapet de laminage est en équilibre entre d'une part la pression de positionnement qu'exerce sur lui le fluide de commande et d'autre part un ressort de rappel, notamment un ressort de compression. Un clapet de laminage peut être notamment un obturateur monté en tiroir dans un alésage, dans lequel il coulisse avec étanchéité, ledit alésage étant traversé au niveau dudit clapet par un passage de communication entre les deux chambres de travail, ledit clapet comportant une gorge destinée à raccorder entre elles, à l'intérieur de l'alésage, les deux extrémités dudit passage et à régler, selon la position de ladite gorge par rapport auxdites extrémités, la section de l'ouverture dudit passage, l'une des deux parties de l'alésage qui sont disposées de part et d'autre dudit clapet étant directement reliée, par un canal de transport, à une chambre secondaire. En position de repos, un clapet de laminage peut, par exemple, obturer sensiblement totalement le passage de communication auquel il est associé.

L'amortisseur peut aussi comporter un passage de communication étranglé annexe ou permanent, de section constante par exemple, destiné à permettre le passage du fluide principal de l'une à l'autre des deux chambres de travail lorsque le (ou les) autre(s) passage(s) de communication est (sont) sensiblement obturé(s) par le(s) clapet(s) de laminage au(x)quel(s) il(s) est (ou sont) associé(s).

Préférentiellement encore, chaque chambre secondaire peut être associée à un circuit de transfert permettant un écoulement de fluide d'une des chambres de travail vers ladite chambre secondaire, lorsque ladite chambre secondaire se remplit. Chaque chambre de travail peut être reliée par un circuit de transfert à une première chambre secondaire et reliée par un circuit complémentaire à la deuxième chambre secondaire, de façon à permettre le transfert, lorsque ladite deuxième chambre secondaire se vide, de sensiblement la quantité de fluide dont se vide ladite deuxième chambre secondaire, de ladite deuxième chambre secondaire vers ladite première chambre secondaire, par l'intermédiaire d'une chambre principale. Plus particulièrement, celle des deux parties d'alésage disposées de chaque côté du clapet de laminage coulissant dans cet alésage, et qui est opposée, quant à elle, au canal de transport reliant ledit alésage à une chambre secondaire, débouche, par des conduits complémentaires, dans la chambre de travail reliée par un circuit de transfert à l'autre desdites chambres secondaires, réalisant ainsi avec ledit canal de transport un circuit complémentaire.

De façon avantageuse, une chambre de travail associée à une chambre secondaire par un circuit de transfert se remplit en même temps que ladite chambre secondaire.

De façon avantageuse encore, au moins une partie du circuit de transfert est associée à un clapet différentiel destiné à l'obturer lorsque la chambre secondaire associée audit circuit de transfert se vide. Un clapet différentiel peut notamment s'obturer sous l'effet de la pression du fluide de la chambre de travail dans laquelle débouche le circuit de transfert associé audit clapet différentiel, lorsque ladite chambre de travail se vide. Les clapets différentiels des circuits de transfert de chacune des deux chambres secondaires sont fonctionnellement et/ou structurellement combinés l'un à l'autre, l'un étant en position fermée en appui sur son siège, tandis que l'autre est en position ouverte.

De préférence, un circuit de transfert débouche dans la chambre secondaire à laquelle il est associé, par le canal de transport associé à ladite chambre secondaire. Le corps ou cylindre principal, la tige principale, le cylindre secondaire et la tige secondaire peuvent avoir des axes confondus. L'alésage d'un clapet de laminage peut s'étendre dans le piston d'amortissement, perpendiculairement à l'axe de la tige principale. Les clapets différentiels peuvent être aussi disposés dans le piston d'amortissement, symétriquement par rapport aux clapets de laminage et perpendiculairement à l'axe de la tige principale.

Un autre objet de l'invention est une contre-fiche de rappel élastique à amortissement incorporé, de type élasto-hydraulique, en particulier pour gérer les mouvements angulaires alternés des pales d'un rotor d'aérodyne à voilure tournante dans le plan de rotation desdites pales, comportant :
- deux organes rigides munis chacun de moyens d'articulation destinés à relier l'un des organes rigides à une première pièce, telle qu'une pale ou un organe de liaison de ladite pale au moyeu du rotor, et l'autre organe rigide à une seconde pièce, telle que ledit moyeu du rotor ;
- au moins un organe de rappel élastique comprenant un manchon d'un matériau élastiquement déformable adhérisé de façon étanche par ses surfaces latérales respectivement interne et externe entre des tronçons tubulaires rigides, respectivement interne et externe, sensiblement co-axiaux suivant l'axe de la contrefiche et solidaires chacun de l'un respectivement des deux organes rigides, de sorte que le manchon soit déformé en cisaillement, lorsque les deux organes rigides sont déplacés l'un par rapport à l'autre sensiblement selon l'axe général de la contre-fiche et que le manchon exerce sur lesdits organes rigides une action de rappel élastique tendant à les ramener dans une position relative initiale ; et
- un amortisseur hydraulique selon l'invention, dont le corps principal constitue l'un des deux organes rigides, le piston d'amortissement dudit amortisseur étant solidaire de l'autre desdits organes rigides.

La tige mobile secondaire et la tige mobile principale peuvent être montées l'une sur les moyens d'articulation reliant l'un desdits organes rigides à la première pièce, l'autre sur les moyens d'articulation reliant l'autre desdits organes rigides à la deuxième pièce.

Dans un mode de réalisation avantageuse, la contre-fiche comporte un manchon adhérisé par sa surface interne sur la surface externe d'une paroi tubulaire du corps principal de l'amortisseur.

Dans un autre mode de réalisation, également avantageux, elle comporte deux manchons élastiques adhérisés par leur surface interne sur la surface externe tubulaire de tronçons solidaires de la tige mobile principale, et, par leur surface externe, aux surfaces internes tubulaires de tronçons solidaires du corps principal de l'amortisseur. Les manchons élastiques peuvent délimiter respectivement au moins partiellement la chambre de compensation et la chambre auxiliaire. La tige mobile secondaire peut être reliée à la tige mobile principale par au moins une paroi souple de rappel élastique. La paroi souple de rappel élastique peut avoir une forme tronconique s'évasant d'un fourreau dans lequel est montée la tige mobile secondaire jusqu'à la paroi interne d'un tronçon tubulaire.

Préférentiellement, le cylindre d'amortissement, la tige principale, la tige secondaire, le cylindre secondaire ont des axes confondus.

La description qui suit est faite en référence aux dessins annexés. Elle est purement illustrative et ne présente aucun caractère limitatif.

Sur ces dessins :
La Figure 1 est une représentation schématique illustrant le principe de fonctionnement du dispositif de commande interne d'un amortisseur conforme à l'invention ;
La Figure 2 est une vue en coupe d'une contrefiche hydro-élastique selon un premier mode de réalisation, munie d'un amortisseur conforme à l'invention ;
La Figure 3 est une vue en coupe selon la ligne III-III de la Figure 2 ;
La Figure 4 est une vue en coupe selon la ligne IV-IV de la Figure 2 ;
La Figure 5 est une vue en coupe, semblable à la Figure 2, d'une contre-fiche hydro-élastique selon un deuxième mode de réalisation, munie d'un amortisseur conforme à l'invention ;
La Figure 6 est une vue en coupe selon la ligne VI-VI de la Figure 5 ;
La Figure 7 est une vue en coupe selon la ligne VII-VII de la Figure 4 ;
La Figure 8, enfin, est un graphe illustrant une loi d'amortissement qui peut être obtenue avec un amortisseur conforme à l'invention.

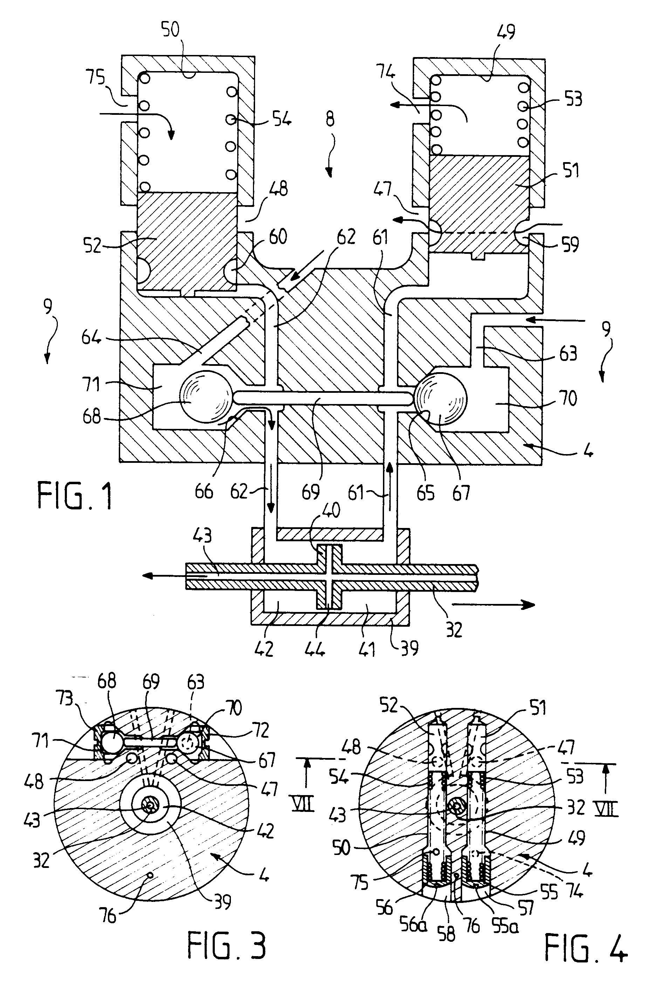

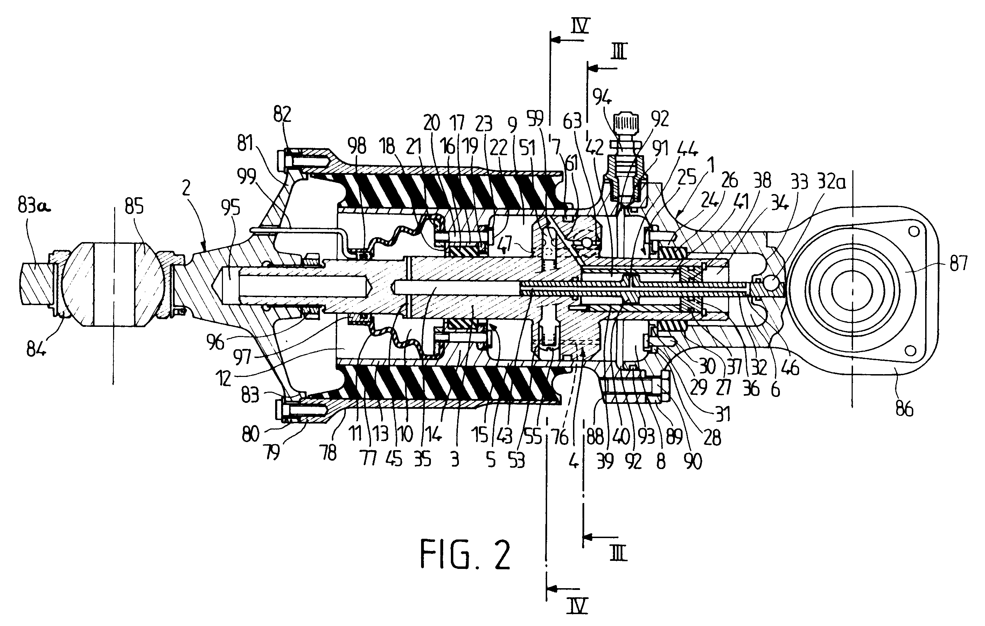

On voit, sur les Figures 1 à 4 et 7 qu'une contre-fiche hydro-élastique comportant un amortisseur conforme à un premier mode de réalisation de l'invention comporte essentiellement deux corps rigides 1 et 2 mobiles l'un par rapport à l'autre, le corps rigide 1 étant le corps principal de l'amortisseur, le corps rigide 2 étant solidaire d'une tige principale 3, qui supporte un piston d'amortissement 4 mobile en translation dans un cylindre d'amortissement 5 ménagé dans le corps principal 1.

La tige principale 3 traverse totalement le cylindre d'amortissement 5. Son extrémité opposée à son extrémité par laquelle elle est fixée au corps rigide 2 se déplace dans une chambre auxiliaire 6 ménagée dans le corps principal 1 vers une de ses extrémités. Cette chambre auxiliaire 6 a sensiblement une forme cylindrique. Son diamètre est légèrement supérieur au diamètre extérieur de la tige principale 3 au niveau de ladite extrémité. Le piston 4 est un disque, dont le diamètre extérieur correspond sensiblement au diamètre intérieur du cylindre principal 5 dans lequel il coulisse de façon sensiblement étanche, l'étanchéité entre ledit piston 4 et le cylindre principal 5 étant assurée par un joint dynamique 7 annulaire bordant la périphérie dudit piston 4. Ce piston d'amortissement 4 délimite dans le cylindre principal 5 deux chambres de travail 8 et 9, celle de ces deux chambres qui est la plus proche de la chambre auxiliaire 6 étant référencée par 8, l'autre par 9.

Dans le corps principal 1 est en outre disposé, dans le prolongement de la chambre auxiliaire 6 et des chambres de travail 8 et 9, au-delà de la chambre 9, une chambre de compensation 10. Cette chambre de compensation 10 est traversée par la tige principale 3, dont la partie disposée à l'opposé de la chambre de travail 9 par rapport à ladite chambre 10 est son extrémité par laquelle elle est solidarisée du corps rigide 2. Cette chambre de compensation 10 est partiellement délimitée intérieurement par une paroi souple en soufflet 11, qui a une forme de révolution axée sur l'axe de la tige principale 3 et s'évasant sensiblement de l'extrémité de ladite chambre 10, qui est la plus éloignée de la chambre de travail 9, vers son autre extrémité. Cette chambre de compensation 10 et le soufflet 11 sont disposés dans un évidement cylindrique 12 délimité dans le corps principal 1 par une paroi tubulaire 13 qui délimite aussi le cylindre principal 5. Ledit évidement cylindrique 12 est ouvert à son extrémité opposée à la chambre de travail 9 et est délimité à son autre extrémité par une cloison 14 qui sépare ledit évidement 12 dudit cylindre principal 5.

Cette cloison 14 est traversée co-axialement par un alésage 15 que traverse la tige principale 3. Entre la paroi cylindrique interne 17 dudit alésage 15 et la tige principale 3 est disposée une bague 16 formant palier et joint d'étanchéité dynamique annulaire. Cette bague 16, réalisée en un matériau de frottement tel que le bronze par exemple, est maintenue en place axialement par rapport à l'alésage 15, par serrage entre une bordure 18 annulaire bordant intérieurement la paroi 17, à son extrémité du côté de la chambre de compensation 10, et une pièce de butée 19. La pièce de butée 19 est plate et annulaire et est disposée en appui sur la surface de la cloison 14, du côté de la chambre de travail 9. Elle est maintenue par rapport à ladite cloison 14 par l'intermédiaire de vis 20 traversant ladite cloison 14 et dont le filetage coopère avec le filetage complémentaire dont sont munis des alésages taraudés traversant une pièce à encastrement 21 annulaire destinée à maintenir par un de ses bords la paroi souple du soufflet 11 par rapport à la cloison 14, par serrage dudit bord entre la cloison 14 et la pièce d'encastrement 21. La tête 22 d'une vis 20 s'appuie par l'intermédiaire d'une lamelle intercalaire 23, annulaire et bordée par des pattes de maintien, sur la pièce de butée 19, ladite tête 22 étant elle-même disposée dans la chambre de travail 9.

La chambre de travail 8 est délimitée à son extrémité opposée au piston d'amortissement 4 par un fond 24 traversé par un alésage 25 dans lequel peut coulisser la tige principale 3. Cet alésage 25 est bordé par la paroi cylindrique délimitant la chambre auxiliaire 6. Il est aussi associé à une bague 26 formant palier et joint d'étanchéité dynamique annulaire qui assure, en coopérant avec la paroi de la chambre auxiliaire 6 et la tige principale 3, l'étanchéité entre la chambre de travail 8 et ladite chambre auxiliaire 6. Le joint dynamique 26 est maintenu en place dans un épaulement 27 ménagé dans la paroi intérieure de l'alésage 25 par serrage entre une paroi latérale annulaire dudit épaulement 27 et une pièce de butée 28 maintenue en place sur le fond 24, dans la chambre 8, par l'intermédiaire de la coopération de vis 30 dont les filetages coopérent avec les filetages d'alésages taraudés ménagés dans le fond 24 et dont les têtes 31 s'appuient, par l'intermédaire d'une lamelle intercalaire 29 contre ladite pièce de butée 28. Les têtes 31 des vis 30 sont disposées à l'intérieur de la chambre de travail 9. Le palier-joint 26 permet le coulissement de la tige principale 3 dans l'alésage 25 et réalise l'étanchéité entre la chambre auxiliaire 5 et la chambre de travail 9.

La chambre auxiliaire 6 est traversée par une tige secondaire 32 qui s'étend à partir du fond 33 de ladite chambre auxiliaire 6 du côté opposé à la chambre 8, jusque dans la tige principale 3. La tige principale 3 est traversée, dans sa partie qui s'étend, à partir du piston d'amortissement 4, dans la chambre de travail 8 et jusque dans la chambre auxiliaire 6, par un évidement tubulaire 34 dont l'axe coincide avec l'axe de ladite tige 3. Cet évidement tubulaire 34 est prolongé au-delà du piston d'amortissement 4, dans la partie de la tige 3 qui s'étend dans la chambre de travail 9 et jusque dans la chambre de compensation 10, par un canal tubulaire 35, dont le diamètre intérieur est légèrement inférieur au diamètre extérieur de la tige secondaire 32. Ce canal 35 est axé sur l'axe de la tige principale 3, la tige secondaire 32 s'étendant partiellement dans ledit canal 35, dans lequel est disposée son extrémité libre et dans lequel elle peut coulisser par rapport à la tige principale 3.

Dans l'évidement 34, vers l'extrémité de la tige 3 qui se trouve dans la chambre auxiliaire 6, est disposé un disque de séparation 36, dont le diamètre extérieur correspond sensiblement au diamètre intérieur dudit évidement 34. Ce disque 36 est traversé par la tige secondaire 32 et est associé à des joints d'étanchéité annulaires 37 et 38 qui réalisent respectivement, d'une part, l'étanchéité statique entre ledit disque de séparation 36 et la paroi intérieure de l'évidement 34, et, d'autre part, l'étanchéité dynamique entre ledit disque 36 et la tige secondaire 32. Dans l'évidement 34, entre le fond dudit évidement, où débouche le canal 35, et le disque 36, est disposé un cylindre secondaire 39 dont le diamètre extérieur correspond sensiblement au diamètre intérieur dudit évidement 34 et à l'intérieur duquel coulisse la tige 32. Cette tige 32 porte, dans sa partie médiane, un piston 40, qui délimite, dans ledit cylindre secondaire 39, deux chambres secondaires 41 et 42, la chambre 41 étant délimitée par ledit cylindre secondaire entre ledit piston 40 et le disque 36, la chambre 42 étant l'autre des deux chambres.

Le piston secondaire 40 est monté coulissant dans le cylindre secondaire 39 avec un jeu de laminage périphérique. La tige secondaire 32 comporte en son intérieur un canal secondaire 43 qui s'étend dans la longueur de ladite tige 32, de la chambre auxiliaire 6 jusqu'à l'extrémité libre de ladite tige 32 disposée dans le canal 35. Le piston secondaire 40 est traversé radialement par un canal annexe 44, qui met en communication, grâce au jeu de laminage, l'intérieur du cylindre secondaire 39 et le canal secondaire 43. Les canaux 35 et 43 sont en outre associés à des canaux 45 et 46 qui traversent respectivement radialement la tige principale 3 et la tige secondaire 32, pour assurer la communication entre la chambre de compensation 10 et la chambre auxiliaire 6 par l'intermédiaire des canaux 35 et 43. La chambre auxiliaire 6, les chambres de travail 8 et 9, la chambre de compensation 10, les canaux 35 et 43 à 46 ainsi que les chambres secondaires 41 et 42 sont remplis d'une huile à haute viscosité. La chambre auxiliaire 6, la chambre de compensation 10 et les canaux 35, 43 à 46 constituent les éléments d'un dispositif de compensation, destiné à compenser à la fois les dilatations thermiques du fluide hydraulique et les variations des volumes des chambres qui contiennent ledit fluide.

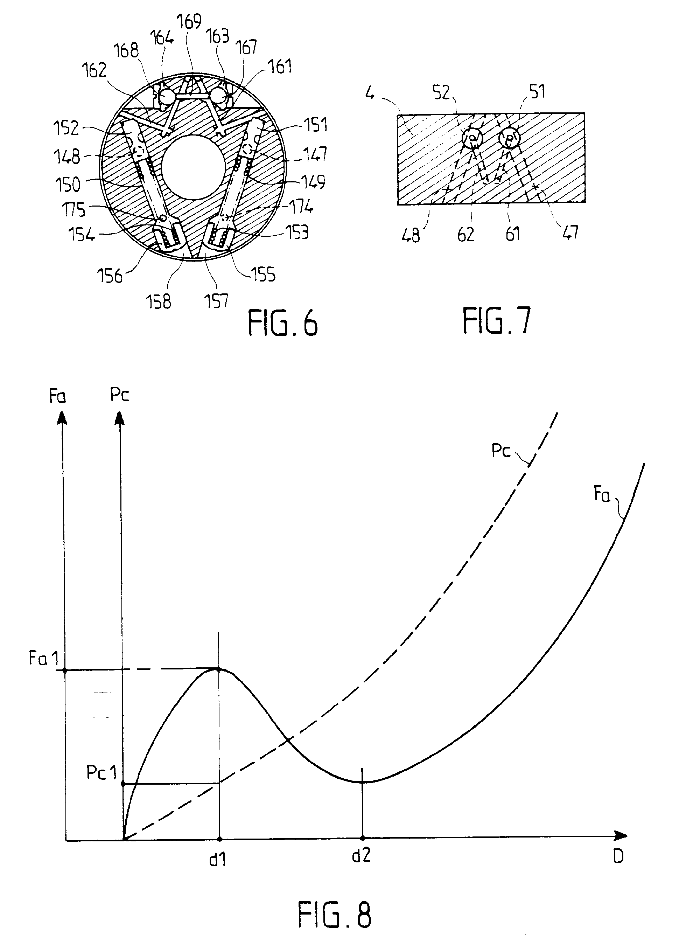

Le piston d'amortissement 4 est traversé dans son épaisseur par deux passages de communication 47 et 48, destinés à servir de passage de communication étranglé entre les deux chambres de travail 8 et 9. Ces deux passages 47 et 48 sont sensiblement tubulaires, leurs axes s'étendant dans l'épaisseur du piston 4, en faisceau dans un même plan, ce plan étant sensiblement tangeant à la surface extérieure de la tige 3, l'axe commun dudit piston 4 et de la tige 3 étant contenu dans le plan médiateur de ces deux droites. Les extrémités de ces passages de communication 47 et 48 qui débouchent dans la chambre 9 sont plus proches l'une de l'autre que les extrémités desdits passages de communication qui débouchent dans la chambre 8 (voir Figure 7).

Le piston 4 est aussi traversé en son intérieur par deux alésages cylindriques 49 et 50 dont les axes sont perpendiculaires à l'axe de la tige 3 et au plan les axes des passages de communication 47 et 48. Ces deux alésages 49 et 50 sont respectivement traversés par les passages de communication 47 et 48. Ils sont, dans le piston 4, plus proches de la chambre de travail 9 que de la chambre 8. A l'intérieur de ces alésages 49 et 50, sont disposés, sensiblement au niveau des passages de communication 47 et 48, des clapets cylindriques de laminage référencés respectivement par 51 et 52. Ces clapets 51 et 52 sont associés respectivement chacun à un ressort en spirale 53 et 54 s'étendent dans l'alésage 49 ou 50 auquel est associé le clapet sur lequel ils agissent, en étant maintenu en place dans ledit alésage 49 ou 50 par l'intermédiaire d'une capsule, référencée respectivement par 55 et 56 dans laquelle ledit ressort 53 ou 54 est emboîté à son extrémité opposée au clapet 51 ou 52. Chaque capsule 55 ou 56 est disposée respectivement dans un logement 57 ou 58 prolongeant l'alésage 49 ou 50 auquel elle est associée, à son extrémité disposée du côté opposé au passage de communication 47 et 48 par rapport à la tige 3. Les surfaces internes de ces logements 57 et 58 sont munies de filetages qui coopérent avec les filetages dont sont munies les capsules 55 et 56 sur leur surface externe, la position d'une capsule 55 ou 56 dans son logement 57 ou 58 pouvant ainsi être réglée par un opérateur, pour ajuster la pression d'ouverture du clapet 51 ou 52. Les logements 57 et 58 débouchent à leur extrémité opposée à l'alésage hors du piston d'amortissement 4. Les capsules 55 et 56 sont par ailleurs respectivement munies, sur la surface de leur fond directement en regard avec la paroi 13, d'une rainure 55a ou 56a destinée à coopérer avec un outil extérieur, pour permettre ledit réglage de la capsule dans son logement, par exemple à coopérer avec un tournevis. Les parois du piston 4 qui délimitent respectivement partiellement les chambres 8 et 9, sont reliées à la paroi latérale cylindrique par une forme tronconique, au niveau de laquelle les logements 57 et 58 débouchent hors du piston 4. Les logements 57 et 58 sont ainsi tous deux en communication avec la chambre de travail 9.

Chaque clapet de laminage 51 ou 52 est muni d'une gorge référencée respectivement par 59 et 60 qui l'entoure annulairement dans sa partie médiane. Ladite gorge 59 ou 60 a une section droite, dans un plan passant par l'axe de l'alésage, en forme de demi-cercle dont le diamètre correspond sensiblement au diamètre des passages de communication étranglée 47 et 48. Ladite gorge 59 ou 60 est destinée à relier entre elles, à l'intérieur de l'alésage 49 ou 50 auquel son clapet 51 ou 52 est associé, les deux extrémités du passage de communication 47 ou 48 qui traverse ledit alésage 49 ou 50, lorsque ledit clapet 51 ou 52 est positionné dans son alésage 49 ou 50 de façon que la gorge 59 ou 60 dont il est muni se trouve au niveau dudit passage de communication 47 ou 48. A son extrémité disposée du côté opposé au ressort 53 ou 54, par rapport au clapet 51 ou 52 auquel il est associé, débouche, dans chaque alésage 49 ou 50, un canal de transport 61 ou 62 s'étend de ladite extrémité jusqu'à respectivement la chambre secondaire 41 ou 42. Une partie du canal de transport 61 s'étendant dans la longueur de la paroi du cylindre secondaire 39, pour déboucher dans la chambre secondaire 41, sensiblement au niveau du disque de séparation 36 qui délimite ladite chambre 41 à une de ses extrémités.

Ainsi que cela ressort plus spécifiquement des Figures 1 et 3, dans la partie médiane de chacun de ces canaux de transport 61 et 62, qui est située dans le piston d'amortissement 4, débouche respectivement un canal de transfert 63 ou 64 s'étendant entre ledit canal de transport 61 ou 62 et respectivement la chambre de travail 9 ou 8. L'ouverture de chacun de ces canaux de transfert 63 ou 64 est commandée par un clapet différentiel 67 ou 68 associé à un siège 65 ou 66. Les deux clapets 67 et 68 sont des clapets sphériques et sont reliés entre eux par une tige de liaison 69. Chacun de ces clapets 67 ou 68 est mobile par rapport à son siège 65 ou 66 respectivement dans un logement 70 ou 71 dans lequel débouche la partie du canal de transfert 63 ou 64 qui communique directement avec la chambre 9 ou 8. La disposition de ces clapets 67 et 68 est telle que la surface travaillante de chacun directement associée respectivement à la chambre 9 ou 8 est plus grande que la surface de chacun associée respectivement à la chambre 41 ou 42. Le logement 70 ou 71 est délimité partiellement par les parois intérieures d'une coiffe 72 ou 73 montée par vissage dans un alésage du piston d'amortissement 4, directement en regard de l'orifice qui traverse le siège 65 ou 66, et où débouche la partie du canal de transfert 63 ou 64 qui communique directement avec le canal de transport 61 ou 62. Les clapets différentiels 67 et 68 ainsi que les sièges 65 et 66 auxquels ils sont associés sont disposés symétriquement par rapport au plan médiateur des passages de communication 47 et 48. La partie d'un alésage 49 ou 50 dans laquelle est disposé le ressort 53 ou 54 est reliée par un conduit 74 ou 75 respectivement à la chambre de travail 8 ou 9. Le canal de transfert 63 ou 64, le canal de transport 61 ou 62 constituent ensemble, respectivement, un circuit de transfert reliant la chambre de travail 9 ou 8 à la chambre secondaire 41 ou 42.

Le piston d'amortissement 4 est en outre traversé dans son épaisseur par un troisième passage de communication 76 s'étendant dans ledit piston 4 de l'une à l'autre des deux chambres de travail 8 et 9 parallèlement à l'axe de la tige 3 et sensiblement dans le plan médiateur des deux passages de communication 47 et 48. Le diamètre intérieur de ce passage de communication 76 est beaucoup plus petit que le diamètre intérieur des passages de communication 47 et 48. Ce passage 76 constitue ainsi un passage permanent d'étranglement de section constante.

En se référant à la Figure 2, on voit que l'amortisseur ci-dessus décrit est intégré dans une structure de contre-fiche qui comporte, de façon connue, un manchon de caoutchouc 77 qui se déforme élastiquement, essentiellement en cisaillement, et qui est moulé entre la surface externe tubulaire de la paroi 13 du corps principal 1 et la paroi interne d'un tronçon tubulaire 78 solidaire du corps 2. Ce tronçon 78 est fixé par une bride 79, qui le termine, contre la bride 80 d'un flasque 81 du corps rigide 2, à l'aide de douze vis 82 dont le filetage coopère avec des filetages, dont sont munis des alésages ménagés dans la bride 79, et dont la tête s'appuie sur la surface externe de la bride complémentaire 80. Le flasque 81 est centré sur le tronçon tubulaire 78, par l'intermédiaire d'une collerette cylindrique intérieure 83.

Le flasque 81 porte, à son extrémité du côté opposé aux chambres de travail 8 et et à la chambre de compensation 10, une patte de fixation 83a équipée d'un oeil à rotule 84 et d'une rotule 85 d'articulation de la contrefiche, par exemple sur le moyeu du rotor (non représenté). Le corps rigide principal 1 et muni, dans le prolongement des chambres de travail 8 et 9 et de la chambre auxiliaire 6, à son extrémité opposée au flasque 81, d'une patte de fixation 86 dans laquelle est montée une rotule 87 d'articulation de la contre-fiche, par exemple sur le pied d'une pale de rotor (non représentée) ou sur un manchon ou une chape (également non représentés) de liaison de la pale au moyeu.

La paroi cylindrique 13 du corps rigide principal 1 se termine, au-delà du manchon 77, au niveau de son extrémité opposée à son extrémité par laquelle elle débouche devant le flasque 81, par une bride 88 coopérant avec une bride complémentaire 89 pour maintenir, par rapport à la partie du corps principal 1 qui porte le manchon 77, la partie externe dudit corps principal 1 dans laquelle est montée la chambre auxiliaire 6 et qui porte la rotule 87 et la patte 86 qui lui est associée, une paroi externe de ladite partie définissant le fond 24 de la chambre de travail 8. Ces deux brides 88 et 89 sont solidarisées l'une à l'autre, par l'intermédiaire de vis 90, dont le filetage coopére avec le filetage dont sont munis des alésages traversant la bride 88, et dont la tête s'appuie sur la surface de la bride 89 la plus éloignée du manchon 77. La bride 89 se positionne par rapport à la bride 88 par l'intermédiaire d'une collerette 91 dont elle est munie, ladite collerette 91 se logeant dans un évidement annulaire 92 ménagé sur la paroi intérieure de la bride 88 pour la recevoir. Entre la surface externe de ladite collerette 91 et la surface interne de la paroi de la bride 88 définissant ledit évidement 92, est disposé un joint d'étanchéité annulaire statique 93. Le corps principal 1 est en outre muni, au niveau desdites brides 88 et 89, d'une vis de remplissage et de purge 94 qui obture ou libère un évent débouchant dans le cylindre principal 5, sensiblement dans la chambre de travail 8.

La tige secondaire 32 est solidarisée au fond 33 de la chambre auxiliaire 6 par des moyens classiques de solidarisation tels qu'une goupille transversale 32a. Ladite tige secondaire 32, la tige principale 3, le cylindre principal 5, le cylindre secondaire 39 et la chambre auxiliaire 6 ont leurs axes confondus. La tige 3 est solidarisée au moyeu central portant le flasque 81, par coopération d'un filetage extérieur dont elle est munie à son extrémité au niveau dudit flasque 81, avec d'une part, le filetage intérieur d'un alésage 95 dans lequel ladite tige 3 s'emboîte, et avec, d'autre part, le filetage d'un contre-écrou 96 extérieur. Ce contre-écrou 96 peut être serré avec un outil approprié engagé entre le flasque 81 et le tronçon tubulaire 78 en plaçant la tige principale 3 en butée contre la cloison 14.

L'extrémité de la paroi 11 en soufflet délimitant la chambre de compensation 10, opposée à l'extrémité de ladite paroi qui est montée sur la cloison 14, est solidarisée à une bague 97, dans laquelle peut coulisser la tige principale 3, ladite bague 97 étant associée à un joint dynamique 98 assurant l'étanchéité de ladite chambre de compensation 10. Sur ladite bague 97 est montée une tige-repère 99 qui s'étend de ladite bague 97 jusqu'au flasque 81 qu'elle traverse, ladite tige-repère 99 étant destinée à permettre le contrôle du remplissage de la chambre de compensation 10.

La contre-fiche précédemment décrite s'utilise de la façon ci-dessous exposée. Lorsque les corps rigides 1 et 2 ont, sous l'effet de la rotation des pales et du rotor, un mouvement relatif l'un par rapport à l'autre et s'écartent de leur position d'équilibre, ils sont rappelés vers cette position par l'intermédiaire du manchon élastique 77, le mouvement étant par ailleurs amorti par l'ensemble formant amortisseur.

A titre d'exemple, si comme cela a été représenté par les flêches de la Figure 1, le piston d'amortissement 4 se déplace dans le cylindre principal 5 de façon à faire diminuer le volume de la chambre 9 comprimée et à augmenter celui de la chambre de travail 8 détendue, ce qui correspond à une sollicitation en traction de la contre-fiche et de son amortisseur, l'huile comprise dans la chambre secondaire 41 se trouve repoussée par le piston secondaire 40 vers le clapet 51, par l'intermédiaire du canal de transport 61, sous réserve d'un débit de fuite passant de la chambre secondaire 41 à l'autre chambre secondaire 42 par le jeu permanent de laminage autour du piston 44.

Tant que le déplacement relatif des corps 1 et 2 reste suffisamment faible, le clapet ce laminage 51 est maintenu sous la pression du ressort 53 dans le fond de l'alésage 49. Le passage de communication 47 reste alors obturé par ledit clapet 51. Dans le même temps, la chambre secondaire 42 étant en détente, et la pression de la chambre principale 9 comprimée s'appliquant sur le clapet 52 du côté de son ressort de rappel 54 en pénétrant dans l'alésage 50 par l'orifice 75, le clapet 52 est maintenu sur le fond de l'alésage 50 où débouche le canal de transport 62, et le passage de communication 48 reste lui aussi obturé. De ce fait, l'huile à haute viscosité comprimée passe de la chambre de travail 9 à la chambre de travail 8, par le passage de communication 76 permanent étranglé. La section droite de ce passage 76 ayant un diamètre relativement petit, l'amortissement réalisé est alors un amortissement à fort gradient, ce qui correspond au début de la courbe représentée sur le graphe de la Figure 8.

Lorsque le déplacement relatif des corps 1 et 2 augmente encore, à partir d'une valeur prédéterminée de la pression de l'huile dans la chambre 41, l'huile de ladite chambre 41 dans le canal de transport 61 va déplacer le clapet de laminage 51 par rapport au fond sur lequel ledit clapet 51 est en appui et à l'encontre du ressort de rappel 53. Ce déplacement est d'autant plus d'important que le déplacement relatif des deux corps rigides 1 et 2 est lui-même important. Le clapet 51 se soulevant, la gorge 59 se positionne progressivement en regard du passage de communication 47 ouvrant ainsi plus ou moins ledit passage 47, selon qu'elle est ou non exactement en regard des deux extrémités dudit passage 47 sur les parois de l'alésage 49. Le clapet 52 reste, quant à lui, pour la même raison que précédemment, en appui sur le fond de l'alésage 50 où débouche le canal de transport 62 et obture le passage de communication étranglé 48. L'huile va donc essentiellement passer de la chambre de travail 9 à la chambre 8, par le passage de communication 47. Pendant la phase d'augmentation progressive de la section de passage par la gorge 59, l'amortissement réalisé est plus faible que précédemment, ce qui correspond à la deuxième partie de la courbe représentée sur le graphe de la Figure 8, c'est-à-dire à la partie de course décroissante à partir du sommet Fa1, correspondant à un pic d'effort obtenu pour un déplacement relatif d'entraînant une pression de commande Pc1 dans la chambre secondaire 41.

Si le déplacement relatif des deux corps 1 et 2 augmente encore, au-delà de la position où la gorge 59 est exactement au niveau du passage de communication 47, le clapet de laminage 51 va progressivement obturer à nouveau ledit passage de communication 47 et engendrer un amortissement à fort gradient, qui correspond à la troisième partie de la courbe précitée (partie de courbe croissante sur la droite du graphe).

Lors du déplacement du clapet de laminage 51 vers l'extrémité de l'alésage 49 vers laquelle est montée la capsule 55 qui porte le ressort 53, ledit clapet de laminage 51 repousse l'huile par le conduit 74 vers la chambre 8 en détente, qui se remplit. La tige 3 ayant un diamètre identique de part et d'autre du piston d'amortissement 4, dans les chambres 8 et 9, le volume dont ladite chambre 9 comprimée diminue, est égal au volume dont la chambre 8 en détente augmente. Or, le volume dont la chambre 9 diminue correspond sensiblement au volume d'huile qui passe de ladite chambre 9 à la chambre 8, par les passages de communication 47 et 76. Le petit volume d'huile repoussé par le clapet de laminage 51 à travers le conduit 75 est donc en surplus dans ladite chambre 8. Il se trouve évacué par l'intermédiaire du canal de transfert 64 et du canal de transport 62 dans la chambre secondaire 42 également en détente. Le clapet différentiel 68 est, en effet, en position ouverte écartée de son siège 66, puisque le clapet 67 auquel il est relié par la tige de liaison 69 est, quant à lui, maintenu en appui sur son siège 65, par la pression différentielle qu'exerce sur lui l'huile comprimée de la chambre 9, pression qui lui est transmise dans la chambre 70 par l'intermédiaire du canal de transfert 63.

Lors d'un tel déplacement relatif en extension des deux corps rigides 1 et 2 l'un par rapport à l'autre, le déplacement de l'extrémité de la tige principale 3 dans la chambre auxiliaire 6 libére un volume potentiel pour l'huile. Cette variation de volume est compensée par un transfert d'huile de la chambre de compensation 10 dans ladite chambre auxiliaire 5, par l'intermédiaire des éléments du circuit de compensation que constituent les différents canaux 35 et 43 à 46.

On voit, par ailleurs, sur la Figure 1, que pour des raisons de symétrie les rôles respectifs des chambres de travail 8 et 9 et des différents éléments qui leurs sont associés, sont interchangés les uns par rapport aux autres dans le cas où les deux corps rigides 1 et 2 subissent un déplacement relatif l'un par rapport à l'autre, non plus en extension, mais en compression. La seule différence importante tient en ce qu'une partie de l'huile de la chambre auxiliaire 6 est alors repoussée par l'extrémité libre de la tige principale 3, à travers les canaux 43 à 46 et 35, dans la chambre de compensation 10. Les parois en soufflet 11 de ladite chambre 10 se dilatent, la tige repère 99 sortant un peu plus du flasque 81.

En se reportant à nouveau à la Figure 8, on voit que le fonctionnement précédemment décrit de l'amortisseur peut être résumé, dans son principe, de la façon suivante : à un déplacement relatif D des deux corps rigides 1 et 2 l'un par rapport à l'autre, correspond une pression Pc dans l'amortisseur de commande ; à cette pression Pc correspond une position d'équilibre d'un des clapets de laminage de l'amortissement ; à cette position d'équilibre correspond une section d'ouverture de passage de communication étranglé auquel est associé ledit clapet, ladite section d'ouverture étant déterminée au préalable par construction ; à cette section d'ouverture correspond un effort d'amortissement Fa sur la tige principale 3 et le piston d'amortissement 4. La loi d'amortissement réalisée est essentiellement déterminée par le profil des clapets de laminage. Une telle structure d'amortisseur permet donc, par jeu de construction, d'obtenir une loi d'amortissement pratiquement quelconque en fonction du déplacement dynamique amorti.

Dans l'exemple qui vient d'être décrit, la loi d'amortissement est une loi optimisme plus particulièrement adaptée pour des contre-fiches de rappel élastique à amortissement incorporé, pour pales d'un rotor d'aérodyne à voilure tournante. On peut distinguer trois zones d'amortissement en fonction du déplacement dynamique :
- une première zone correspond à de faibles déplacements D jusqu'à d1 (de 0 à plus ou moins 2 mm), pour lesquels, il est souhaitable d'avoir un fort gradient d'amortissement, pour contrer les phénomènes de résonnance au sol ;
- dans une deuxième zone ou zone intermédiaire, qui correspond à des déplacements relatifs moyens entre d1 et d2 (entre 2 et 4 mm environ en valeur absolue), le niveau d'amortissement est faible, ce qui est notamment souhaitable pour des configurations de vol stabilisées ;
- dans une troisième zone qui correspond à des déplacements importants au delà de d2 (supérieurs à 4 mm environ en valeur absolue), c'est-à-dire au cas de facteur de charge, un fort gradient d'ammortissement est à nouveau nécessaire.

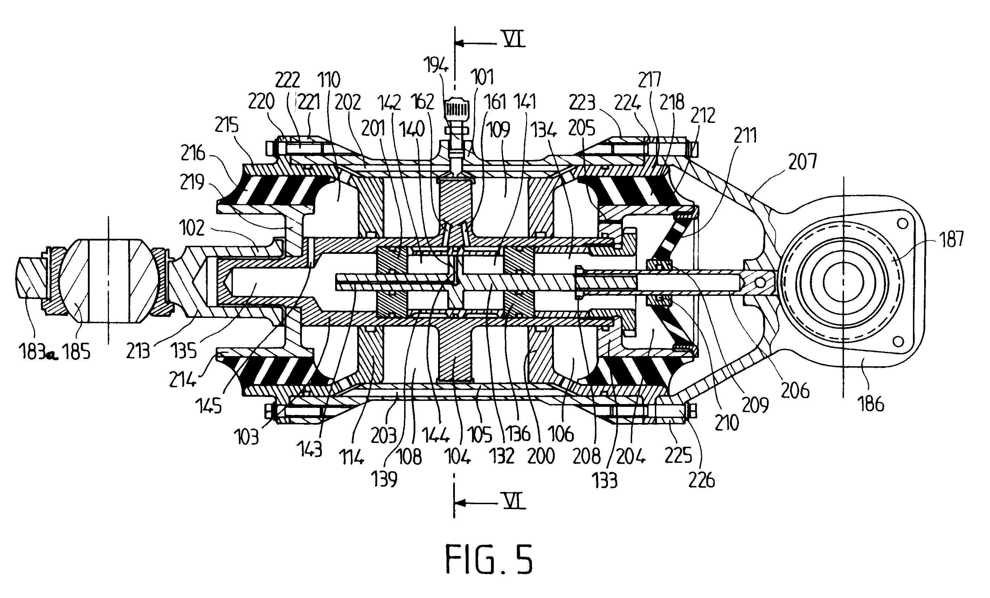

On a représenté sur les Figures 5 et 6 une contre-fiche de rappel élastique à amortisseur incorporé, conforme à un deuxième mode de réalisation de l'invention. Il a été repris, pour les éléments de ce deuxième mode de réalisation que l'on retrouve dans le premier mode de réalisation précédemment décrit, le même chiffrage de référence, augmenté de 100.

On voit sur ces figures qu'une contre-fiche conforme à ce deuxième mode de réalisation de l'invention comporte deux corps rigides 101 et 102. Le corps rigide 102 est solidaire d'une tige principale 103, qui le traverse sensiblement l'autre corps rigide 101 dans sa longueur. Sur cette tige 103 est monté un piston d'amortissement 104 coulissant en translation dans un cylindre principal 105 ménagé à l'intérieur du corps rigide 101. Le diamètre intérieur du cylindre principal 105 est légèrement supérieur au diamètre extérieur du piston 104 afin de délimiter un jeu permanent de laminage périphérique. Les axes de la tige principale 103, du piston d'amortissement 104 et du cylindre principal 105 sont sensiblement confondus. Le piston d'amortissement 104 délimite dans le cylindre principal 105, avec deux cloisons extrêmes 114 et 200, deux chambres de travail 108 et 109. Ces deux chambres de travail 108 et 109 sont elles-mêmes comprises entre une chambre de compensation 110 et une chambre auxiliaire 106, la cloison 114 délimitant partiellement la chambre de compensation 110, la cloison 200 délimitant partiellement la chambre auxiliaire 106.

La tige principale 103 est traversée dans sa longueur par un évidement cylindrique 134 prolongé par un canal 135. Dans l'évidement cylindrique 134 est délimité, entre deux disques 136 et 201, un cylindre secondaire 139. Le corps principal rigide d'amortissement 101 est en outre solidarisé à une tige secondaire 132 qui s'étend axialement en partie dans la tige principale 103. Cette tige secondaire 132 traverse, dans ladite tige principale 103, la chambre auxiliaire 106, les chambres de travail 108 et 109, et partiellement la chambre de compensation 110. Cette tige secondaire 132 traverse aussi le cylindre secondaire 139 dans sa longueur, son extrémité libre étant disposée dans le canal 135. Sur cette tige secondaire 132 est monté un piston secondaire 140, qui délimite, dans le cylindre secondaire 139, deux chambres secondaires 141 et 142. Ledit piston secondaire 140 a un diamètre externe légèrement inférieur au diamètre intérieur du cylindre secondaire 139 afin de délimiter, comme dans l'exemple précédent, un jeu périphérique de laminage dont est fonction la loi de pression de commande, générée par l'amortisseur de commande constitué par le piston secondaire 140 et le cylindre secondaire 139. La tige secondaire 132 est en outre traversée axialement, de la partie médiane du piston 140 jusqu'à son extrémité dans le canal 135, par un canal secondaire 143 qui débouche dans ledit canal 135. Le piston 140 est traversé radialement par un canal annexe 144 s'étendant dudit canal secondaire 143 à la périphérie dudit piston 140. Ce canal 144 permet, avec le jeu de laminage qui existe entre le piston secondaire 140 et le cylindre secondaire 139, la communication entre les chambres secondaires 141 et 142 et le canal 135.

La tige 103 est traversée, radialement, par un canal annexe 145 mettant en communication ledit canal 135 et la chambre de compensation 110. La chambre de compensation 110 et la chambre auxiliaire 106 sont reliées entre elles par des canaux 202 et 203 qui traversent le corps rigide 101 dans sa paroi délimitant le cylindre principal 105. La chambre auxiliaire 106, la chambre de compensation 110, les canaux 202 et 203, le canal 135 et les canaux annexes 143 à 145 sont des éléments d'un dispositif de compensation destiné à compenser les dilatations thermiques de fluide hydraulique ainsi que les variations des volumes contenant ledit fluide. Ce dispositif de compensation comporte en outre une chambre de gavage 204 disposée, dans le prolongement de la chambre de compensation 110, des chambres de travail 108 et 109 et la chambre auxiliaire 106, du côté de ladite chambre 106 opposé à la chambre de travail 109. Le fond 133 de la chambre auxiliaire 106 est traversé par un passage étranglé 205 qui relie ladite chambre auxiliaire 106 et la chambre de gavage 204.

La chambre auxiliaire 106 est totalement traversée par la tige principale 103. L'extrémité de ladite tige 103 opposée à son extrémité par laquelle elle est solidarisée au corps rigide 102 est solidarisée au fond 133 de ladite chambre 106. L'évidement cylindrique 134 débouche hors de la tige principale 103 dans la chambre de gavage 204. La tige secondaire 132 est montée sur un fourreau 206 solidaire d'un flasque 207 du corps rigide 101. Ledit fourreau 206 et la tige secondaire 132 sont solidarisés l'un à l'autre par la coopération de leurs filetages complémentaires ainsi que par la coopération du filetage de la tige secondaire 132 avec le filetage d'un contre-écrou 208 venant se bloquer sur l'extrémité libre du fourreau 206. Le flasque 207 porte une patte de fixation 186 sur laquelle est montée une rotule 187. Le fourreau 206 est en outre associé, dans sa partie médiane, à une bague 209 pouvant coulisser par rapport audit fourreau 206, ladite bague étant associée à un joint dynamique annulaire 210 assurant l'étanchéité entre ladite bague 209 et ledit fourreau. Sur cette bague 210 est montée une paroi élastique tronconique 211 s'évasant de ladite bague 209 jusqu'à un tronc cylindrique 212. Le fond 133, le tronc cylindrique 212, l'évidement 134, le disque 136 et la paroi souple 211 délimitent ensemble la chambre de gavage 204.

Le piston d'amortissement 104 comporte en outre, dans son épaisseur, deux alésages 149 et 150 (voir Figure 6) dans lesquels coulissent respectivement les clapets 151 et 152 repoussés respectivement par des ressorts 153 et 154 vers le fond desdits alésages 149 et 150. Les axes de ces deux alésages 149 ou 150 sont disposés en faisceau dans une section droite du piston d'amortissement 104. Les ressorts 153 et 154 sont supportés, vers les extrémités des alésages 149 et 150 où lesdits alésages 149 et 150 sont les plus proches l'un de l'autre, par des capsules 155 ou 156 disposées dans des logements 157 ou 158 prolongeant lesdits alésages 149 ou 150. Aux autres extrémités desdits alésages 149 ou 150 débouchent respectivement des canaux de transport 161 et 162 reliant lesdits alésages 149 ou 150 aux chambres 141 et 142. Dans ces canaux de transport 161 et 162 débouchent des canaux de transfert 163 et 164 reliant respectivement lesdits canaux de transport aux chambres 109 et 108. Ces canaux de transfert 163 et 164 sont respectivement associés à des clapets différentiels 167 et 168 reliés entre eux par une tige de liaison 169 et commandant l'ouverture et la fermeture lesdits canaux de transfert 163 et 164. Vers leurs extrémités qui portent les capsules 155 et 156, les alésages 149 et 150 débouchent, par l'intermédiaire de conduits 174 et 175 respectivement dans la chambre de travail 108 et la chambre de travail 109.

La tige principale 103 est solidarisée au corps rigide 102 par l'intermédiaire d'un moyeu axial 213 qui porte une patte de fixation 183a associée à une rotule 185. La tige 103 est elle-même solidarisée à un tronçon tubulaire 214. Ce tronçon tubulaire 214 est relié à un tronçon tubulaire 215 qui prolonge latéralement la cloison 114 et qui entoure sensiblement ledit tronçon tubulaire 214, par un manchon 216 en un matériau élastique qui est adhérisé de façon étanche respectivement aux surfaces externe et interne des tronçons 214 et 215. A l'extrémité opposée de la contrefiche, le tronc de cylindre 212 est de la même façon relié à un tronçon tubulaire 217 qui l'entoure, par un deuxième manchon élastique 218 également adhérisé de façon étanche aux tronçons 212 et 217. Les deux manchons élastiques 216 et 218 délimitent chacun avec respectivement les cloisons 114 et 200, les fonds 133 et 219, et une partie des tronçons tubulaires 215 et 217, la chambre de compensation 110 et la chambre auxiliaire 106.

La pièce formée par le tronçon 215 et la cloison 114 est solidarisée à la partie centrale du corps principal 101, partie qui délimite le cylindre principal 105, par l'intermédiaire de brides 220 et 221 sont sont munis respectivement ledit tronçon tubulaire 215 et ledit cylindre principal 105. Ces deux brides 220 et 221 sont maintenues l'une par rapport à l'autre par l'intermédiaire de vis 222, dont la tête s'appuie sur la bride 220 et dont le filetage coopére avec le filetage d'alésages traversant la bride 221. De la même façon, la pièce formée par le tronçon tubulaire 217 et la cloison 200, la partie principale du corps 101 et le flasque 207 sont solidarisés les uns aux autres par l'intermédiaire de brides 223, 224 et 225, dont ils sont munis respectivement, lesdites brides étant associées à des vis 226 qui traversent des alésages dont sont munis lesdites brides 223 à 225, le filetage de ces vis 226 coopérant avec le filetage des alésages de la bride 223, la tête desdites vis 226 s'appuyant sur la surface extérieure de la bride 225, le corps desdites vis 226 s'étendant à travers les alésages dont sont munis les brides 224 et 225.

En outre, le cylindre principal 105 est associé à une vis de purge 194 destinée à permettre le remplissage des chambres de travail 108 et 109, par exemple en huile à haute viscosité.

Le fonctionnement d'une telle contre-fiche est sensiblement identique au fonctionnement de la contre-fiche précédemment décrite, quant à sa partie amortisseur, et en fonctionnement des contre-fiches décrites dans la demande de brevet FR-2.629.163 de la demanderesse, à laquelle on se reportera avantageusement por toute précision à ce sujet . Lorsque les deux corps rigides 101 et 102 sont écartés de leur position d'équilibre, ils sont rappelés l'un vers l'autre par les manchons élastiques 216 et 218, l'ensemble du mouvement étant amorti par l'amortisseur intégré dans la contre-fiche, la loi d'amortissement étant sensiblement fonction du déplacement relatif des deux corps 101 et 102 l'un par rapport à l'autre.

Dans les deux exemples décrits ci-dessus, on constate que le pilotage d'ouvertures de laminage de l'amortisseur à partir d'un dispositif lié au déplacement dynamique de cet amortisseur, et comprenant un amortisseur secondaire ou de commande délivrant une pression de commande hydraulique pilotant lesdites ouvertures de laminage, permet d'obtenir, grâce à ce découplage, une loi de laminage de l'amortisseur qui est totalement indépendante de l'effort d'amortissement résultant.

Dans ces deux exemples également, pour assurer la compensation des variations de volume par dilatation thermique ou fuites accidentelles de l'huile hydraulique, la chambre de compensation est en communication, d'une part, directe avec l'amortisseur de commande par un conduit ménagé au milieu du piston, pour filtrer les pulsations de débit à la fréquence d'utilisation, et, d'autre part, à travers l'amortisseur de commande et par l'intermédiaire des clapets différentiels pour l'amortisseur principal.

Il est bien entendu que, bien qu'ayant été ici décrit dans le cadre de contre-fiche de rappel élastique à amortissement incorporé, en particulier pour pale d'aérodyne à voilure tournante, l'amortisseur conforme à l'invention peut trouver de nombreuses autres applications.

## Revendications

1. Amortisseur hydraulique comportant, dans un corps principal (1 ; 101), deux chambres de travail (8, 9 ; 108, 109) à volume variable en sens opposé, lesdites chambres de travail (8, 9 ; 108, 109) contenant un fluide visqueux principal destiné à passer de l'une à l'autre par au moins un passage de communication étranglé (47, 48, 76 ; 147, 148, 176), sous l'effet de la poussée d'un piston d'amortissement (4 ; 104) se déplaçant dans ledit corps (1 ; 101), la section à ouverture d'au moins un passage de communication (47, 48 ; 147, 148) étant commandée par le positionnement, par rapport audit passage (47, 48 ; 147, 148), d'un clapet de laminage (51, 52 ; 151, 152) sur lequel agit un fluide de commande, caractérisé en ce que ledit fluide de commande est contenu dans au moins une chambre secondaire (41, 42 ; 141, 142) délimitée dans un cylindre secondaire (39 ; 139) par un piston de commande (40 ; 140) monté coulissant dans ledit cylindre secondaire (39 ; 139), ladite chambre secondaire (41, 42 ; 141, 142) étant associée à un canal de transport (61, 62 ; 161, 162) du fluide de commande de ladite chambre secondaire (41, 42 ; 141, 142) jusqu'au clapet de laminage (51, 52 ; 151, 152), sous l'action du piston de commande (40 ; 140), ledit cylindre secondaire (39 ; 139) et ledit piston de commande (40 ; 140) étant solidaires l'un du corps principal (1 ; 101), l'autre du piston d'amortissement (4 ; 104) de sorte que la loi de mise en pression dudit fluide de commande positionnant ledit clapet de laminage est liée aux déplacements relatifs desdits corps principal et piston d'amortissement.

2. Amortisseur selon la revendication 1, caractérisé en ce que le piston de commande (40 ; 140) est solidaire du corps principal (1 ; 101), le cylindre secondaire (39 ; 139) étant solidaire du piston d'amortissement (15 ; 215).

3. Amortisseur selon l'une des revendications 1 ou 2, caractérisé en ce que le fluide de commande est contenu principalement dans deux chambres secondaires (41, 42 ; 141, 142) délimitées dans le cylindre secondaire (39 ; 139) par le piston de commande (40 ; 140).

4. Amortisseur selon la revendication 2, prise seule ou en combinaison avec la revendication 3, comportant dans le corps principal (1 ; 101) un cylindre d'amortissement (5 ; 105) dans lequel les deux chambres de travail (8, 9 : 108, 109) sont délimitées par le piston d'amortissement (4 ; 104), ledit piston d'amortissement (4 ; 104) étant monté sur une tige mobile principale (3 ; 103) traversant l'une au moins des chambres de travail (8, 9 ; 108, 109), caractérisé en ce que le cylindre secondaire (39 ; 139) s'étend au moins partiellement longitudinalement dans ladite tige mobile principale (3 ; 103), le piston de commande (40 ; 140) étant monté sur une tige secondaire (32 ; 132) mobile en translation longitudinale à l'intérieur dudit cylindre secondaire (39 ; 139) et solidaire du corps principal (1 ; 101).

5. Amortisseur selon la revendication 4, comportant un dispositif de compensation des dilatations thermiques du fluide hydraulique et/ou des variations des volumes contenant ledit fluide, comprenant au moins une chambre de compensation (10 ; 110) associée à un circuit de compensation (35, 43, 44, 45, 46 ; 135, 143, 144, 145 ; 202, 203) logé au moins partiellement dans la tige mobile principale (3 ; 103), caractérisé en ce que la tige mobile secondaire (32 ; 132) coulisse au moins partiellement à l'intérieur de la tige mobile principale (3 ; 103) dans une partie (35 ; 135) du circuit de compensation.

6. Amortisseur selon la revendication 5, caractérisé en ce que le circuit de compensation (35, 43, 44, 45, 46 ; 135, 143, 144, 145 ; 202, 203) s'étend partiellement dans la tige mobile secondaire (32 ; 132) et débouche de ladite tige secondaire (32 ; 132) dans la partie (35 ; 135) dudit circuit de compensation qui se trouve à l'intérieur de la tige mobile principale (3 ; 103).

7. Amortisseur selon l'une des revendications 5 ou 6, caractérisé en ce qu'au moins une chambre secondaire (41, 42 ; 141, 142) communique par un canal annexe (44 ; 144) avec le circuit de compensation, ce qui permet l'absorption dans la chambre de compensation (10 ; 110) des dilatations thermiques du fluide de commande, constitué par dudit fluide visqueux principal.

8. Amortisseur selon la revendication 7 prise en combinaison avec la revendication 3, caractérisé en ce que le piston de commande (40 ; 140) est monté dans le cylindre secondaire (39 ; 139) avec un jeu de laminage, le canal annexe (44 ; 144) étant disposé radialement dans ledit piston de commande (40 ; 140) et permettant la communication de chacune des deux chambres secondaires (41, 42 ; 141, 142) avec la partie (43 ; 143) du circuit de compensation qui s'étend dans la tige mobile secondaire (32 ; 132).

9. Amortisseur selon l'une des revendications 5 à 8, caractérisé en ce que la tige mobile secondaire (32 ; 132) s'étend dans une première chambre de travail (8 ; 108) à partir du corps principal (1 ; 101), jusque dans la partie (35 ; 135) du circuit de compensation qui est située dans la mobile principale (3 ; 103) en traversant le cylindre secondaire (39, ; 139), la tige mobile principale (3 ; 103) s'étendant au-delà du piston d'amortissement (4 ; 104) jusque dans la chambre de compensation (10 ; 110), en traversant la deuxième chambre de travail (9 ; 109), la partie (35 ; 135) du circuit de compensation logée dans la tige mobile principale (3, 103) débouchant dans ladite chambre de compensation (10 ; 110).

10. Amortisseur selon l'une des revendications 5 à 9, caractérisé en ce qu'il comporte une chambre auxiliaire (6 ; 106) reliée à la chambre de compensation (10 ; 110) par au moins un canal de compensation (35, 43 ; 202, 203), les chambres de travail (8, 9 ; 108, 109) étant disposées entre ladite chambre de compensation (10 ; 110) et ladite chambre auxiliaire (6 ; 106), ladite chambre auxiliaire (6 ; 106) étant traversée par la tige mobile secondaire (32 ; 132).

11. Amortisseur selon la revendication 10, caractérisé en ce que la chambre auxiliaire (6 ; 106) est traversée, au moins partiellement, par la tige mobile principale (3 ; 103).

12. Amortisseur selon la revendication 11, caractérisé en ce qu'une des extrémités de la tige mobile principale (3) se déplace dans ladite chambre auxiliaire (6), le circuit de compensation (35, 43, 44, 45, 46) s'étendant dans la tige mobile secondaire (32) et dans la tige mobile principale (3) pour déboucher, vers une de ses extrémités, de la tige mobile secondaire (32) dans la chambre auxiliaire (6), et, vers son autre extrémité, de la tige mobile principale (3) dans la chambre de compensation (10).

13. Amortisseur selon l'une des revendications 5 à 12, caractérisé en ce que la chambre de compensation (10) est délimitée intérieurement au moins partiellement par une paroi souple en soufflet (11).

14. Amortisseur selon la revendication 11, caractérisé en ce que la tige mobile principale (103) traverse totalement la chambre auxiliaire (106), un canal de compensation (202, 203) s'étendant dans le corps principal (101).

15. Amortisseur selon la revendication 14, caractérisé en ce que la chambre auxiliaire (106) est comprise entre une chambre de travail (108) et une chambre de gavage (204) dans laquelle se déplace l'une des extrémités de la tige mobile principale (103), au moins une paroi séparant ladite chambre auxiliaire (106) et ladite chambre de gavage (204) étant traversée par un orifice de communication étranglé (205).

16. Amortisseur selon la revendication 15, caractérisé en ce que la chambre de gavage (204) est traversée par la tige mobile secondaire (132).

17. Amortisseur selon la revendication 3 prise en combinaison avec l'une quelconque des revendications précédentes, caractérisé en ce que chacune des deux chambres secondaires (41, 42 ; 141, 142) est associée par un canal de transport (61, 62 ; 161, 162) à un clapet de laminage (51, 52 ; 151, 152).

18. Amortisseur selon la revendication 17, caractérisé en ce qu'il comporte, entre les deux chambres de travail (8, 9 ; 108, 109.) deux passages de communication étranglés (47, 48 ; 147, 148) et deux clapets de laminage (51, 52 ; 151, 152) commandant chacun respectivement par son positionnement la section d'ouverture de chacun desdits passages de communication (47, 48 ; 147, 148), chacun de ces deux clapets (51, 52 ; 151, 152) étant associé respectivement à l'une des chambres secondaires (41, 42 ; 141, 142).

19. Amortisseur selon l'une des revendications 1 à 18, caractérisé en ce qu'un clapet de laminage (51, 52 ; 151, 152) est en équilibre entre d'une part la pression de positionnement qu'exerce sur lui le fluide de commande et d'autre part un ressort (53, 54 ; 153, 154 ) de rappel, notamment de compression.

20. Amortisseur selon l'une quelconque des revendications 1 à 19, caractérisé en ce qu'un clapet de laminage (51, 52 ; 151, 152) est un obturateur monté en tiroir dans un alésage (49, 50 ; 149, 150) dans lequel il coulisse avec étanchéité, ledit alésage (49, 50 ; 149, 150) étant traversé au niveau dudit clapet (51, 52 ; 151, 152), par un passage de communication (47, 48 ; 147, 148) entre les deux chambres (8, 9 ; 108, 109), ledit clapet (51, 52 ; 151, 152) comportant une gorge (59, 60 ; 159,160) destinée à raccorder entre elles à l'intérieur de l'alésage (49, 50 ; 149, 150), les deux extrémités dudit passage (47, 48 ; 147, 148) et à régler, selon la position de ladite gorge (59, 60 ; 159, 160) par rapport auxdites extrémités, la section de l'ouverture dudit passage (47, 48 ; 147, 148), l'une des deux parties de l'alésage (49, 50 ; 149, 150), gui sont disposées de part et d'autre dudit clapet (51, 52 ; 151, 152) étant directement reliée par un canal de transport (61, 62 ; 161, 162) à une chambre secondaire (41, 42 ; 141, 142).

21. Amortisseur selon la revendication 19, caractérisé en ce qu'en position de repos, un clapet de laminage (51, 52 ; 151, 152) obture sensiblement totalement le passage de communication (47, 48 ; 147, 148) auquel il est associé.

22. Amortisseur selon l'une des revendications 1 à 21, caractérisé par le fait qu'il comporte un passage de communication étranglé annexe (76) destiné à permettre le passage du fluide visqueux principal de l'une à l'autre des deux chambres de travail lorsque le (ou les) autre(s) passage(s) de communication (47, 48 ; 147, 148) est (sont) obturé(s).

23. Amortisseur selon la revendication 3 prise en combinaison avec l'une quelconque des revendications précédentes, caractérisé en ce que chaque chambre secondaire (41, 42 ; 141, 142) est associée à un circuit de transfert (63, 64 ; 163, 164) permettant un écoulement de fluide d'une des chambres de travail (8, 9 ; 108, 109) vers ladite chambre secondaire, lorsque ladite chambre secondaire se remplit.

24. Amortisseur selon la revendication 23, caractérisé en ce que chaque chambre de travail (9, 8 ; 109, 108) est reliée par un circuit de transfert (63, 64 ; 163, 164) à une première chambre secondaire (41, 42 ; 141, 142) et est reliée par un circuit complémentaire (74, 75) à la deuxième chambre secondaire (42, 41 ; 142, 141), de façon à permettre le transfert, lorsque ladite deuxième chambre secondaire (42, 41 ; 142, 141) se vide, de la quantité de fluide dont se vide ladite deuxième chambre secondaire (42, 41 ; 142, 141), de ladite deuxième chambre secondaire (42, 41 ; 142, 141) vers ladite première chambre secondaire (41, 42 ; 141, 142), par l'intermédiaire de ladite chambre principale (9, 8 ; 109, 108).

25. Amortisseur selon les revendications 20 et 24, prises en combinaison, caractérisé en ce que celle des deux parties d'alésage (49, 50 ; 149, 150) disposées de chaque côté du clapet de laminage (51, 52 ; 151, 152) coulissant dans cet alésage, et qui est opposée, quant à elle, au canal de transport (61, 62 ; 161, 162) reliant ledit alésage (49, 50 ; 149, 150) à l'une des chambres secondaires (41, 42 ; 141, 152), débouche, par des conduits complémentaires (74, 75 ; 174, 175) dans la chambre de travail (8, 9 ; 108, 109) reliée par un circuit de transfert (63, 64 ; 163, 164) à l'autre desdites chambres secondaires (42, 41 ; 142, 141) réalisant ainsi avec ledit canal de transport (61, 62 ; 161, 162) un circuit complémentaire.

26. Amortisseur selon l'une des revendications 23 à 25, caractérisé en ce qu'une chambre de travail (8, 9 ; 108, 109) associée à une chambre secondaire (41, 42 ; 141, 142) par un circuit de transfert (63, 64 ; 163, 164), se remplit en même temps que ladite chambre secondaire (41, 42 ; 141, 142).

27. Amortisseur selon l'une des revendications 23 à 26, caractérisé en ce qu'au moins une partie du circuit de transfert (63, 64 ; 163, 164) est associée à un clapet différentiel (67, 68 ; 167, 168) destiné à l'obturer lorsque la chambre secondaire (41, 42 ; 141, 142) associée audit circuit de transfert (63, 64 ; 163, 164) de vide.

28. Amortisseur selon les revendications 26 et 27 prises en combinaison, caractérisé en ce qu'un clapet différentiel (67, 68 ; 167, 168) s'obture sous l'effet de la pression du fluide de la chambre de travail (9, 8 ; 109, 108) dans laquelle débouche le circuit de transfert (63, 64 ; 163, 164) associé audit clapet différentiel (67, 68 ; 167, 168), lorsque ladite chambre de travail (9, 8 ; 109, 108) se vide.

29. Amortisseur selon l'une des revendications 27 ou 28, caractérisé en ce les clapets différentiels (67, 68 ; 167, 168) des circuits de transfert (63, 64 ; 163, 164) de chacune des deux chambres secondaires (41, 42 ; 141, 142) sont combinés l'un à l'autre, l'un étant en position fermée en appui sur son siège, tandis que l'autre est en position ouverte.

30. Amortisseur selon l'une des revendications 23 à 29, caractérisé en ce qu'un circuit de transfert (63, 64 ; 163, 164) débouche dans la chambre secondaire (41, 42 ; 141, 142) à laquelle il est associé, par le canal de transfert (61, 62 ; 161, 162) associé à ladite chambre secondaire (41, 42 ; 141, 142).

31. Amortisseur selon la revendication 4 prise en combinaison avec l'une quelconque des revendications précédentes, caractérisé en ce que le cylindre principal (5 ; 105), la tige principale (3 ; 103), le cylindre secondaire (39 ; 139) et la tige secondaire (32 ; 132) ont des axes confondus.

32. Amortisseur selon les revendications 4 et 19 prises en combinaison, caractérisé en ce que l'alésage (49, 50 ; 149, 150) d'un clapet (51, 52 ; 151, 152) s'étend dans le piston d'amortissement (4 ; 104) perpendiculairement à l'axe de la tige principale (3 ; 103).

33. Amortisseur selon la revendication 31 prise en combinaison avec l'une des revendications 26 à 30, caractérisé en ce que les clapets différentiels (67, 68 ; 167, 168) sont disposés dans le piston d'amortissement (4 ; 104) symétriquement par rapport au(x) clapet(s) de laminage (51, 52 ; 151, 152) et perpendiculairement à l'axe de la tige principale (3 ; 103).

34. Contre-fiche de rappel élastique à amortissement incorporé, de type élasto-hydraulique, en particulier pour gérer les mouvements angulaires alternés des pales d'un rotor d'aérodyne à voilure tournante dans le plan de rotation desdites pales, comportant :
- deux organes rigides (1, 2 ; 101, 102) munis chacun de moyens d'articulation (84, 85, 86, 87 ; 184, 185, 186, 187) destinés à relier l'un des organes rigides (1 ; 101) à une première pièce, telle qu'une pale ou un organe de liaison de ladite pale au moyeu du rotor, et l'autre organe rigide (2 ; 102) à une seconde pièce, telle que ledit moyeu du rotor ;
- au moins un organe de rappel élastique (77 ; 216, 218) comprenant un manchon d'un matériau élastiquement déformable adhérisé de façon étanche par ses surfaces latérales respectivement interne et externe entre des tronçons tubulaires rigides (13, 78 ; 214, 215, 217, 212) respectivement interne et externe, sensiblement co-axiaux suivant l'axe de la contre-fiche et solidaires chacun de l'un respectivement des deux organes rigides (1, 2 ; 101, 102), de sorte que le manchon (77 ; 216, 218) soit déformé en cisaillement, lorsque les deux organes rigides (1, 2 ; 101, 102) sont déplacés l'un par rapport à l'autre sensiblement selon l'axe général de la contre-fiche et que le manchon (77 ; 216, 218) exerce sur lesdits organes rigides (1, 2 ; 101, 102) une action de rappel élastique tendant à les ramener dans une position relative initiale ; et
- un amortisseur hydraulique selon l'une des revendications 1 à 33, le corps principal (1 ; 101) dudit amortisseur constituant l'un des deux organes rigides, le piston d'amortissement (4 ; 104) dudit amortisseur étant solidaire de l'autre (2 ; 102) desdits organes rigides.

35. Contre-fiche selon la revendication 34, caractérisée en ce que la tige mobile secondaire (32 ; 132) et la tige mobile principale (3 ; 103) sont montées l'une sur les moyens d'articulation reliant l'un desdits organes rigides à la première pièce, l'autre sur les moyens d'articulation reliant l'autre desdits organes rigides à la deuxième pièce.

36. Contre-fiche selon l'une des revendications 34 ou 35, caractérisée en ce qu'un manchon (77) est adhérisé par sa surface interne sur la surface externe d'une paroi tubulaire (13) du corps principal (1 ; 101) de l'amortisseur.

37. Contre-fiche selon l'une des revendications 34 ou 35, caractérisée en ce qu'elle comporte deux manchons élastiques (216, 218) adhérisés par leur surface interne sur la surface externe tubulaire de tronçons (212, 214) solidaires de la tige mobile principale (103), et, par leur surface externe, sur les surfaces internes tubulaires de tronçons (215, 217) solidaires du corps principal (101) de l'amortisseur.

38. Contre-fiche selon la revendication 37, caractérisée en ce que les manchons élastiques (216, 218) délimitent respectivement au moins partiellement la chambre de compensation (110) et la chambre auxiliaire (106).

39. Contre-fiche selon l'une des revendications 37 ou 38, caractérisée en ce que la tige mobile secondaire (132) est reliée à la tige mobile principale (103) par au moins une paroi souple de rappel élastique (211).

40. Contre-fiche selon la revendication 39, caractérisée en ce que la paroi souple de rappel élastique (211) a une forme tronconique s'évasant d'un fourreau (206) dans lequel est montée la tige mobile secondaire (132) jusqu'à la paroi interne d'un tronçon tubulaire (212).

## Patentansprüche

1. Hydraulischer Dämpfer mit zwei Arbeitskammern (8, 9; 108, 109) mit in entgegengesetzter Richtung variablem Volumen in einem Hauptkörper (1; 101), wobei die Arbeitskammern (8, 9; 108, 109) ein viskoses Hauptfluid enthalten, das unter der Wirkung des Schubes eines Dämpfungskolbens (4; 104), der sich in dem Körper (1; 101) verschiebt, über wenigstens einen verengten Verbindungsdurchgang (47, 48, 76; 147, 148, 176) von der einen zur anderen strömen soll, wobei der Öffnungsquerschnitt wenigstens eines Verbindungsdurchgangs (47, 48; 147, 148) durch die Positionierung eines Glättungsventils (51, 52; 151, 152) bezüglich des Durchgangs (47, 48; 147, 148) gesteuert wird, auf das ein Steuerfluid wirkt, dadurch gekennzeichnet, daß das Steuerfluid in wenigstens einer Sekundärkammer (41, 42; 141, 142) enthalten ist, die durch einen in dem Sekundärzylinder (39, 139) gleitend gelagerten Steuerkolben (40; 140) in einem Sekundärzylinder (39; 139) abgegrenzt ist, wobei die Sekundärkammer (41, 42; 141, 142) einem Kanal (61, 62; 161, 162) zum Transport des Steuerfluids unter der Wirkung des Steuerkolbens (40; 140) von der Sekundärkammer (41, 42; 141, 142) bis zu dem Glättungsventil (51, 52; 151, 152) zugeordnet ist, und wobei der Sekundärzylinder (39; 139) und der Steuerkolben (40; 140) mit dem Hauptkörper (1; 101) bzw. mit dem Dämpfungskolben (4; 104) fest so verbunden sind, daß das Gesetz zum Unterdrucksetzen des Steuerfluids zum Positionieren des Glättungsventils mit den Relativverschiebungen des Hauptkörpers und des Dämpfungskolbens verknüpft ist.

2. Dämpfer nach Anspruch 1, dadurch gekennzeichnet, daß der Steuerkolben (40; 140) mit dem Hauptkörper (1; 101) fest verbunden ist, wobei der Sekundärzylinder (39; 139) mit dem Dämpfungskolben (15; 215) fest verbunden ist.

3. Dämpfer nach einem der Ansprüche 1 oder 2, dadurch gekennzeichnet, daß das Steuerfluid hauptsächlich in zwei durch den Steuerkolben (40; 140) in dem Sekundärzylinder (39; 139) abgegrenzten Sekundärkammern (41; 42; 141; 142) enthalten ist.

4. Dämpfer nur nach Anspruch 2 oder in Kombination mit Anspruch 3, mit einem Dämpfungszylinder (5; 105) in dem Hauptkörper (1; 101), in dem die beiden Arbeitskammern (8, 9; 108, 109) durch den Dämpfungskolben (4; 104) abgegrenzt sind, wobei der Dämpfungskolben (4; 104) an einer beweglichen Hauptstange (3; 103) angebracht ist, die wenigstens eine der Arbeitskammern (8, 9; 108; 109) durchsetzt, dadurch gekennzeichnet, daß sich der Sekundärzylinder (39; 139) wenigstens teilweise in Längsrichtung in der beweglichen Hauptstange (3; 103) erstreckt, wobei der Steuerkolben (40; 140) an einer Sekundärstange (32; 132) angebracht ist, die längsverschieblich im Inneren des Sekundärzylinders (39; 139) beweglich und mit dem Hauptkörper (1; 101) fest verbunden ist.

5. Dämpfer nach Anspruch 4, mit einer Einrichtung zum Ausgleichen der thermischen Ausdehnungen des Hydraulikfluids und/oder der Schwankungen der das Fluid enthaltenden Räume, mit wenigstens einer Ausgleichskammer (10; 110), die einem Ausgleichskreis (35, 43, 44, 45, 46; 135, 143, 144, 145; 202, 203) zugeordnet ist, der wenigstens teilweise in der beweglichen Hauptstange (3; 103) untergebracht ist, dadurch gekennzeichnet, daß die bewegliche Sekundärstange (32; 132) wenigstens teilweise im Inneren der beweglichen Hauptstange (3; 103) in einem Teil (35; 135) des Ausgleichskreises gleitet.

6. Dämpfer nach Anspruch 5, dadurch gekennzeichnet, daß sich der Ausgleichskreis (35, 43, 44, 45, 46; 135, 143, 144, 145; 202, 203) teilweise in der beweglichen Sekundärstange (32; 132) erstreckt und von der Sekundärstange (32; 132) in den Teil (35; 135) des Ausgleichskreises mündet, der sich im Inneren der beweglichen Hauptstange (3; 103) befindet.

7. Dämpfer nach einem der Ansprüche 5 oder 6, dadurch gekennzeichnet, daß wenigstens eine Sekundärkammer (41, 42; 141, 142) über einen Nebenkanal (44; 144) mit dem Ausgleichskreis in Verbindung steht, wodurch in der Ausgleichskammer (10; 110) die Absorption der thermischen Ausdehnungen des Steuerfluids ermöglicht wird, das durch das viskose Hauptfluid gebildet ist.

8. Dämpfer nach Anspruch 7 in Kombination mit Anspruch 3, dadurch gekennzeichnet, daß der Steuerkolben (40; 140) in dem Sekundärzylinder (39; 139) mit einem Glättungsspiel gelagert ist, wobei der Nebenkanal (44; 144) radial in dem Steuerkolben (40; 140) untergebracht ist und die Verbindung jeder der beiden Sekundärkammern (41, 42; 141, 142) mit dem Teil (43; 143) des Ausgleichskreises ermöglicht, der sich in der beweglichen Sekundärstange (32; 132) erstreckt.

9. Dämpfer nach einem der Ansprüche 5 bis 8, dadurch gekennzeichnet, daß sich die bewegliche Sekundärstange (32; 132) in einer ersten Arbeitskammer (8; 108) von einem Hauptkörper (1; 101) ausgehend bis in den Teil (35; 135) des Ausgleichskreises erstreckt, der in der beweglichen Hauptstange (3; 103) liegt, indem er den Sekundärzylinder(39; 139) durchsetzt, wobei sich die bewegliche Hauptstange (3; 103) jenseits des Dämpfungskolbens (4; 104) bis in die Ausgleichskammer (10; 110) erstreckt, indem er die zweite Arbeitskammer (9; 109) durchsetzt, wobei der in der beweglichen Hauptstange (3, 103) untergebrachte Teil (35; 135) des Ausgleichskreises in die Ausgleichskammer (10; 110) mündet.

10. Dämpfer nach einem der Ansprüche 5 bis 9, dadurch gekennzeichnet, daß er eine Hilfskammer (6; 106) aufweist, die über wenigstens einen Ausgleichskanal (35, 43; 202, 203) mit der Ausgleichskammer (10; 110) verbunden ist, wobei die Arbeitskammern (8, 9; 108, 109) zwischen der Ausgleichskammer (10; 110) und der Hilfskammer (6; 106) angeordnet sind, wobei die Hilfskammer (6; 106) von der beweglichen Sekundärstange (32; 132) durchsetzt ist.

11. Dämpfer nach Anspruch 10, dadurch gekennzeichnet, daß die Hilfskammer (6; 106) wenigstens teilweise von der beweglichen Hauptstange (3; 103) durchsetzt ist.

12. Dämpfer nach Anspruch 11, dadurch gekennzeichnet, daß sich eines der Enden der beweglichen Hauptstange (3) in der Hilfskammer (6) verschiebt, wobei sich der Ausgleichskreis (35, 43, 44, 45, 46) in der beweglichen Sekundärstange (32) und in der beweglichen Hauptstange (3) erstreckt, um etwa an einem seiner Enden von der beweglichen Sekundärstange (32) in die Hilfskammer (6) und etwa an seinem anderen Ende von der beweglichen Hauptstange (3) in die Ausgleichskammer (10) zu münden.

13. Dämpfer nach einem der Ansprüche 5 bis 12, dadurch gekennzeichnet, daß die Ausgleichskammer (10) im Inneren wenigstens teilweise durch eine flexible Wand in Form eines Balgs (11) abgegrenzt ist.

14. Dämpfer nach Anspruch 11, dadurch gekennzeichnet, daß die bewegliche Hauptstange (103) die Hilfskammer (106) vollständig durchsetzt, wobei sich ein Ausgleichskanal (202, 203) in dem Hauptkörper (101) erstreckt.

15. Dämpfer nach Anspruch 14, dadurch gekennzeichnet, daß die Hilfskammer (106) zwischen einer Arbeitskammer (108) und einer Ladekammer (204) eingeschlossen ist, in der sich eines der Enden der beweglichen Hauptstange (103) verschiebt, wobei wenigstens eine die Arbeitskammer (106) und die Ladekammer (204) trennende Wand von einer verengten Verbindungsöffnung (205) durchsetzt ist.

16. Dämpfer nach Anspruch 15, dadurch gekennzeichnet, daß die Ladekammer (204) von der beweglichen Sekundärstange (132) durchsetzt ist.

17. Dämpfer nach Anspruch 3 in Kombination mit einem der vorhergehenden Ansprüche, dadurch gekennzeichnet, daß jede der beiden Sekundärkammern (41, 42; 141, 142) über einen Transportkanal (61, 62; 161, 162) einem Glättungsventil (51, 52; 151, 152) zugeordnet ist.

18. Dämpfer nach Anspruch 17, dadurch gekennzeichnet, daß er zwischen den beiden Arbeitskammern (8, 9; 108, 109) zwei verengte Verbindungsdurchgänge (47, 48; 147, 148) sowie zwei Glättungsventile (51, 52; 151, 152) aufweist, die jeweils durch ihre Positionierung den Öffnungsquerschnitt jedes der Verbindungsdurchgänge (47, 48; 147, 148) steuern, wobei jedes der beiden Ventile (51, 52; 151, 152) einer der Sekundärkammern (41, 42; 141, 142) zugeordnet ist.

19. Dämpfer nach einem der Ansprüche 1 bis 18, dadurch gekennzeichnet, daß sich ein Glättungsventil (51, 52; 151, 152) im Gleichgewicht mit dem Positionierungsdruck befindet, das einerseits das Steuerfluid und andererseits eine Rückstellfeder (53, 54; 153, 154), insbesondere eine Druckfeder, darauf ausüben.

20. Dämpfer nach einem der Ansprüche 1 bis 19, dadurch gekennzeichnet, daß ein Glättungsventil (51, 52; 151, 152) eine in einer Bohrung (49, 50; 149, 150) als Schieber gelagerte Verschlußeinrichtung ist, in der es dicht gleitet, wobei die Bohrung (49, 50; 149, 150) auf Höhe des Ventils (51, 52; 151, 152) von einem Verbindungsdurchgang (47, 48; 147; 148) zwischen den beiden Kammern (8, 9; 108, 109) durchsetzt ist, wobei das Ventil (51, 52; 151, 152) eine Auskehlung (59, 60; 159, 160) aufweist, die dazu bestimmt ist, im Inneren der Bohrung (49, 50; 149, 150) die beiden Enden des Durchgangs (47, 48; 147, 148) untereinander zu verbinden und nach der Position der Auskehlung (59, 60; 159, 160) bezüglich der Enden den Öffnungsquerschnitt des Durchgangs (47, 48; 147, 148) zu regeln, wobei einer der beiden Teile der Bohrung (49, 50; 149, 150), die beiderseits des Ventils (51,52; 151,152) angeordnet sind, über einen Transportkanal (61, 62; 161, 162) direkt mit einer Sekundärkammer (41, 42; 141, 142) verbunden ist.

21. Dämpfer nach Anspruch 19, dadurch gekennzeichnet, daß in der Ruhestellung ein Glättungsventil (51, 52; 151, 152) den Verbindungsdurchgang (47, 48; 147, 148) im wesentlichen vollständig verschließt, dem es zugeordnet ist.

22. Dämpfer nach einem der Ansprüche 1 bis 21, dadurch gekennzeichnet, daß er einen verengten Nebendurchgang (76) aufweist, der dazu bestimmt ist, den Durchgang des viskosen Hauptfluids von der einen zu der anderen Arbeitskammer zu ermöglichen, wenn der (oder die) andere(n) Verbindungsdurchgang(-durchgänge) (47, 48; 147, 148) verschlossen ist (sind).

23. Dämpfer nach Anspruch 3 in Kombination mit einem der vorhergehenden Ansprüche, dadurch gekennzeichnet, daß jede Sekundärkammer (41, 42; 141, 142) einem Übertragungskreis (63,64; 163, 164) zugeordnet ist, der es ermöglicht, daß Fluid von einer der Arbeitskammern (8, 9; 108, 109) zu der Sekundärkammer strömt, wenn sich die Sekundärkammer füllt.

24. Dämpfer nach Anspruch 23, dadurch gekennzeichnet, daß jede Arbeitskammer (9, 8; 109, 108) durch einen Übertragungskreis (63, 64; 163, 164) mit einer ersten Sekundärkammer (41, 42; 141, 142) und durch einen komplementären Kreis (74, 75) mit der zweiten Sekundärkammer (42, 41; 142, 141) so verbunden ist, daß dann, wenn sich die zweite Sekundärkammer (42, 41; 142, 141) leert, die Übertragung der Menge an Fluid, um die sich die zweite Sekundärkammer (42, 41; 142, 141) leert, von der zweiten Sekundärkammer (42, 41; 142, 141) über die Hauptkammer (9, 8; 109, 108) zu der ersten Sekundärkammer (41, 42; 141, 142) ermöglicht wird.

25. Dämpfer nach Anspruch 20 und 24 in Kombination, dadurch gekennzeichnet, daß derjenige der beiden Bohrungsteile (49, 50; 149, 150), die an jeder Seite des Glättungsventils (51, 52; 151, 152) angeordnet sind, das in der Bohrung gleitet, der seinerseits dem Transportkanal (61, 62; 161, 162) entgegengesetzt ist, der die Bohrung (49, 50; 149, 150) mit einer der Sekundärkammern (41, 42; 141, 152) verbindet, über komplementäre Leitungen (74, 75; 174, 175) in die Arbeitskammer (8, 9; 108, 109) mündet, die über einen Übertragungskreis (63, 64; 163, 164) mit der anderen der Sekundärkammern (42, 41; 142, 141) verbunden ist, wodurch mit dem Transportkanal (61, 62; 161, 162) ein komplementärer Kreis hergestellt wird.

26. Dämpfer nach einem der Ansprüche 23 bis 25, dadurch gekennzeichnet, daß sich eine durch einen Übertragungskreis (63, 64; 163, 164) einer Sekundärkammer (41, 42; 141, 142) zugeordnete Arbeitskammer (8, 9; 108, 109) gleichzeitig mit der Sekundärkammer (41, 42; 141, 142) füllt.

27. Dämpfer nach einem der Ansprüche 23 bis 26, dadurch gekennzeichnet, daß wenigstens ein Teil des Übertragungskreises (63, 64; 163, 164) einem Differentialventil (67, 68; 167, 168) zugeordnet ist, das dazu bestimmt ist, ihn zu verschließen, wenn sich die dem Übertragungskreis (63, 64; 163, 164) zugeordnete Sekundärkammer (41, 42; 141, 142) leert.

28. Dämpfer nach Anspruch 26 und 27 in Kombination, dadurch gekennzeichnet, daß sich ein Differentialventil (67, 68; 167, 168) unter der Wirkung des Drucks des Fluids der Arbeitskammer (9, 8; 109, 108) schließt, in die der dem Differentialventil (67, 68; 167, 168) zugeordnete Übertragungskreis (63, 64; 163, 164) mündet, wenn sich die Arbeitskammer (9, 8; 109, 108) leert.

29. Dämpfer nach einem der Ansprüche 27 oder 28, dadurch gekennzeichnet, daß die Differentialventile (67, 68; 167, 168) der Übertragungskreise (63, 64; 163, 164) jeder der beiden Sekundärkammern (41, 42; 141, 142) miteinander kombiniert sind, wobei sich das eine in geschlossener Position in Anlage an seinem Sitz befindet, während sich das andere in geöffneter Position befindet.

30. Dämpfer nach einem der Ansprüche 23 bis 29, dadurch gekennzeichnet, daß ein Übertragungskreis (63, 64; 163, 164) in die Sekundärkammer (41, 42; 141, 142), der er zugeordnet ist, durch den der Sekundärkammer (41, 42; 141, 142) zugeordneten Transportkanal (61, 62; 162, 162) mündet.

31. Dämpfer nach Anspruch 4 in Kombination mit einem der vorhergehenden Ansprüche, dadurch gekennzeichnet, daß der Hauptzylinder (5; 105), die Hauptstange (3; 103), der Sekundärzylinder (39; 139) und die Sekundärstange (32; 132) zusammenfallende Achsen aufweisen.

32. Dämpfer nach Anspruch 4 und 19 in Kombination, dadurch gekennzeichnet, daß sich die Bohrung (49, 50; 149, 150) eines Ventils (51, 52; 151, 152) in dem Dämpfungskolben (4; 104) senkrecht zur Achse der Hauptstange (3; 103) erstreckt.

33. Dämpfer nach Anspruch 31 in Kombination mit einem der Ansprüche 26 bis 30, dadurch gekennzeichnt, daß die Differentialventile (67, 68; 167, 168) in dem Dämpfungskolben (4; 104) symmetrisch bezüglich des (der) Glättungsventils (-e) (51, 52; 151, 152) und senkrecht zu der Achse der Hauptstange (3; 103) angeordnet sind.

34. Strebe zur elastischen Rückholung mit integrierter Dämpfung des elastohydraulischen Typs, insbesondere zum Leiten der abwechselnden Winkelbewegungen der Blätter des Rotors eines Drehflügel-Luftfahrzeugs in der Drehebene der Blätter, enthaltend:
- zwei starre Organe (1, 2; 101, 102), die jeweils mit Gelenkmitteln (84, 85, 86, 87; 184, 185, 186, 187) ausgestattet sind, die zur Verbindung eines der starren Organe (1; 101) mit einem ersten Teil wie einem Blatt oder einem Organ zur Verbindung des Blattes mit der Nabe des Rotors sowie des anderen starren Organs (2; 102) mit einem zweiten Teil wie der Nabe des Rotors bestimmt sind;
- wenigstens ein Organ (77; 216, 218) zur elastischen Rückholung mit einer Hülse aus einem elastisch verformbaren Material, das über seine innere bzw. äußere Seitenfläche zwischen einem inneren bzw. äußeren rohrförmigen Abschnitt (13, 78; 214, 215, 217, 212) dicht verklebt ist, die im wesentlichen längs der Achse der Strebe koaxial liegen und jeweils mit einem der beiden starren Organe (1, 2; 101, 102) fest verbunden sind, so daß die Hülse (77; 216, 218) auf Scherung vorgespannt wird, wenn die beiden starren Organe (1, 2; 102, 102) gegeneinander im wesentlichen längs der allgemeinen Achse der Strebe verschoben werden, und die Hülse (77; 216, 218) auf die staren Organe (1, 2; 101, 102) eine elastische Rückholwirkung ausübt, die dazu neigt, sie in eine relative Ausgangsposition zurückzubringen; sowie
- einen hydraulischen Dämpfer nach einem der Ansprüche 1 bis 33, wobei der Hauptkörper (1; 101) des Dämpfers eines der beiden starren Organe bildet und der Dämpfungskolben (4; 104) des Dämpfers mit dem anderen (2; 102) der starren Organe fest verbunden ist.

35. Strebe nach Anspruch 34, dadurch gekennzeichnet, daß die bewegliche Sekundärstange (32; 132) und die bewegliche Hauptstange (3; 103) an den Gelenkmitteln, die eines der starren Organe mit dem ersten Teil verbinden, bzw. an den Gelenkmitteln angebracht sind, die das andere der starren Organe mit dem zweiten Teil verbinden.

36. Strebe nach einem der Ansprüche 34 oder 35, dadurch gekennzeichnet, daß eine Hülse (77) mit ihrer Innenfläche an die Außenfläche einer rohrförmigen Wand (13) des Hauptkörpers (1; 101) des Dämpfers geklebt ist.

37. Strebe nach einem der Ansprüche 34 oder 35, dadurch gekennzeichnet, daß sie zwei elastische Hülsen (216 , 218) aufweist, die mit ihrer Innenfläche an die rohrförmige Außenfläche von mit der beweglichen Hauptstange (103) fest verbundenen Abschnitten (212, 214) und mit ihrer Außenfläche an die rohrförmigen Innenflächen von mit dem Hauptkörper (101) des Dämpfers fest verbundenen Abschnitten (215, 217) geklebt sind.

38. Strebe nach Anspruch 37, dadurch gekennzeichnet, daß die elastischen Hülsen (216, 218) wenigstens teilweise die Ausgleichskammer (110) und die Hilfskammer (106) begrenzen.

39. Strebe nach einem der Ansprüche 37 oder 38, dadurch gekennzeichnet, daß die bewegliche Sekundärstange (132) durch wenigstens eine nachgiebige Wand (211) zur elastischen Rückholung mit der beweglichen Hauptstange (103) verbunden ist.

40. Strebe nach Anspruch 39, dadurch gekennzeichnet, daß die nachgiebige Wand (211) zur elastischen Rückholung die Form eines Kegelstumpfs aufweist, der sich von einer Gleithülse (206), in der die bewegliche Sekundärstange (132) gelagert ist, bis zu der Innenwand eines rohrförmigen Abschnitts (212) ausweitet.

## Claims

1. A hydraulic damper comprising, in a main body (1 ; 101), two working chambers (8, 9 ; 108, 109) with a volume which is variable in opposite directions, said working chambers (8, 9 ; 108, 109) containing a main viscous fluid intended to pass from one to the other via at least one restricted communication passage (47, 48, 76 ; 147, 148, 176), through the action of the thrust of a damping piston (4 ; 104) being displaced in said body (1 ; 101), the opening cross section of at least one communication passage (47, 48 ; 147, 148) being controlled by the positioning, relative to said passage (47, 48 ; 147, 148), of a viscous restriction valve (51,52 ; 151,152)on which a control fluid acts, characterized in that said control fluid is contained in at least one secondary chamber (41, 42 ; 141, 142) delimited in a secondary cylinder (39 ; 139) by a control piston (40 ; 140) mounted slidably in said secondary cylinder (39 ; 139), said secondary chamber (41, 42 ; 141, 142) being associated with a transportation channel (61, 62 ; 161, 162) of the control fluid from said secondary chamber (41, 42 ; 141, 142) as far as the viscous restriction valve (51, 52 ; 151, 152), through the action of the control piston (40 ; 140), said secondary cylinder (39 ; 139) and said control piston (40 ; 140) being integrally attached, one to the main body (1 ; 101), the other to the damping piston (4 ; 104) such that the pressurising law of said control fluid positioning said viscous restriction valve is linked to the relative dynamic displacements of said main body and said damping piston.

2. The damper as claimed in claim 1, wherein the control piston (40 ; 140) is integrally attached to the main body (1 ; 101), the secondary cylinder (39 ; 139) being integrally attached to the damping piston (15 ; 215).

3. The damper as claimed in one of claims 1 or 2, wherein the control fluid is contained mainly in two secondary chambers (41, 42 ; 141, 142) delimited in the secondary cylinder (39 ; 139) by the control piston (40 ; 140).

4. The damper as claimed in claim 2, taken alone or in combination with claim 3, comprising, in the main body (1 ; 101), a damping cylinder (5 ; 105) in which the two working chambers (8, 9 ; 108, 109) are delimited by the damping piston (4 ; 104), said damping piston (4 ; 104) being mounted on a main movable rod (3 ; 103) passing through at least one of the working chambers (8, 9 ; 108, 109), wherein the secondary cylinder (39 ; 139) extends at least partially longitudinally into said main movable rod (3 ; 103), the control piston (40 ; 140) being mounted on a secondary rod (32 ; 132) which is movable in longitudinal translation inside said secondary cylinder (39 ; 139) and integrally attached to the main body (1 ; 101).

5. The damper as claimed in claim 4, comprising a device to compensate for the thermal expansions of the hydraulic fluid and/or the variations in the volumes containing said fluid, comprising at least one compensation chamber (10 ; 110) associated with a compensation circuit (35 , 43, 44, 45, 46 ; 135, 143, 144, 145 ; 202, 203) housed at least partially in the main movable rod (3 ; 103), wherein the secondary movable rod (32 ; 132) slides at least partially inside the main movable rod (3 ; 103) in a portion (35 ; 135) of the compensation circuit.

6. The damper as claimed in claim 5, wherein the compensation circuit (35, 43, 44, 45, 46 ; 135, 143, 144, 145,; 202, 203) extends partially into the secondary movable rod (32 ; 132) and emerges from said secondary rod (32 ; 132) in the portion (35 ; 135) of said compensation circuit which is located inside the main movable rod (3 ; 103).

7. The damper as claimed in one of claims 5 or 6, wherein at least one secondary chamber (41, 42 ; 141, 142) communicates, via a supplementary channel (44 ; 144), with the compensation circuit, which permits the absorption in the compensation chamber (10 ; 110) of the thermal expansions of the control fluid consisting of said main viscous fluid.

8. The damper as claimed in claim 7, taken in combination with claim 3, wherein the control piston (40 ; 140) is mounted in the secondary cylinder (39 ; 139) with a viscous restriction play, the supplementary channel (44 ; 144) being disposed radially in said control piston (40 ; 140) and permitting the communication of each of the two secondary chambers (41, 42 ; 141, 142) with the portion (43 ; 143) of the compensation circuit which extends into the secondary movable rod (32 ; 132).

9. The damper as claimed in one of claims 5 to 8, wherein the secondary movable rod (32 ; 132) extends into a first working chamber (8 ; 108) from the main body (1 ; 101) into the portion (35 ; 135) of the compensation circuit which is located in the main movable rod (3 ; 103), passing through the secondary cylinder (39 ; 139), the main movable rod (3 ; 103) extending beyond the damping piston (4 ; 104) into the compensation chamber (10 ; 110), passing through the second working chamber (9 ; 109), the portion (35 ; 135) of the compensation circuit housed in the main movable rod (3 ; 103) emerging into said compensation chamber (10 ; 110).

10. The damper as claimed in one of claims 5 to 9, wherein the damper comprises an auxiliary chamber (6 ; 106) connected to the compensation chamber (10 ; 110) via at least one compensation channel (35, 43 ; 202, 203), the working chambers (8, 9 ; 108, 109) being disposed between said compensation chamber (10 ; 110) and said auxiliary chamber (6 ; 106), said auxiliary chamber (6 ; 106) having the secondary movable rod (32 ; 132) passing through it.

11. The damper as claimed in claim 10, wherein the auxiliary chamber (6 ; 106) has the main movable rod (3 ; 103) passing at least partially through it.

12. The damper as claimed in claim 11, wherein one of the ends of the main movable rod (3) is displaced in said auxiliary chamber (6), the compensation circuit (35, 43, 44, 45, 46) extending into the secondary movable rod (32) and into the main movable rod (3) in order to emerge, towards one of its ends, from the secondary movable rod (32) into the auxiliary chamber (6), and, towards its other end, from the main movable rod (3) into the compensation chamber (10).

13. The damper as claimed in one of claims 5 to 12, wherein the compensation chamber (10) is at least partially delimited on the inside by a flexible wall in the form of bellows (11).

14. The damper as claimed in claim 11, wherein the main movable rod (103) passes right through the auxiliary chamber (106), a compensation channel (202, 203) extending into the main body (101).

15. The damper as claimed in claim 14, wherein the auxiliary chamber (106) is located between a working chamber (108) and a charging chamber (204) in which one of the ends of the main movable rod (103) is displaced, at least one wall separating said auxiliary chamber (106) and said charging chamber (204) having a restricted communication orifice (205) passing through it.

16. The damper as claimed in claim 15, wherein the charging chamber (204) has the secondary movable rod (132) passing through it.

17. The damper as claimed in claim 3, taken in combination with any one of the preceding claims, wherein each of the secondary chambers (41, 42 ; 141, 142) is associated, via a transportation channel (61, 62 ; 161, 162), with a viscous restriction valve (51, 52 ; 151, 152).

18. The damper as claimed in claim 17, wherein the damper comprises, between the two working chambers (8, 9 ; 108, 109), two restricted communication passages (47, 48 ; 147, 148) and two viscous restriction valves (51, 52 ; 151, 152), each controlling, respectively, via its positioning, the opening cross section of each of said communication passages (47, 48 ; 147, 148), each of these two valves (51, 52 ; 151, 152) being associated, respectively, with one of the secondary chambers (41, 42 ; 141, 142).

19. The damper as claimed in one of claims 1 to 18, wherein a viscous restriction valve (51, 52 ; 151, 152) is in balance between, on the one hand, the positioning pressure exerted on it by the control fluid and, on the other hand, a return spring (53, 54 ; 153, 154), in particular a compression spring.

20. The damper as claimed in any one of claims 1 to 19, wherein a viscous restriction valve (51, 52 ; 151, 152) is a shutter mounted slidably in a bore (49, 50 ; 149, 150) in which it slides in a leaktight manner, said bore (49, 50 ; 149, 150) having a communication passage (47, 48 ; 147, 148) between the two chambers (8, 9 ; 108, 109) passing through it at the level of said valve (51, 52 ; 151, 152), said valve (51, 52 ; 151, 152) comprising a groove (59, 60 ; 159, 160) intended to connect together, inside the bore (49, 50 ; 149, 150), the two ends of said passage (47, 48 ; 147, 148), and to adjust, according to the position of said groove (59, 60 ; 159, 160), relative to said ends, the opening cross section of said passage (47, 48 ; 147, 148), one of the two portions of the bore (49, 50 ; 149, 150), which are disposed on either side of said valve (51, 52 ; 151, 152) being directly connected via a transportation channel (61, 62 ; 161, 162), to a secondary chamber (41, 42 ; 141, 142).

21. The damper as claimed in claim 19, wherein, in the rest position, a viscous restriction valve (51, 52 ; 151, 152) substantially closes the entire communication passage (47, 48 ; 147, 148) with which it is associated.

22. The damper as claimed in one of claims 1 to 21, wherein the damper comprises a supplementary restricted communication passage (76) intended to permit the passage of the main viscous fluid from one to the other of the two working chambers when the other communication passage(s) (47, 48 ; 147, 148) is (are) closed.

23. The damper as claimed in claim 3, taken in combination with any one of the preceding claims, wherein each secondary chamber (41, 42 ; 141, 142) is associated with a transfer circuit (63, 64 ; 163, 164) permitting a flow of fluid from one of the working chambers (8, 9 ; 108, 109) towards said secondary chamber, when said secondary chamber fills up.

24. The damper as claimed in claim 23, wherein each working chamber (9, 8 ; 109, 108) is connected, via a transfer circuit (63, 64 ; 163, 164), to a first secondary chamber (41, 42 ; 141, 142) and is connected, via a complementary circuit (74, 75), to the second secondary chamber (42, 41 ; 142, 141), so as to permit the transfer, when said second secondary chamber (42, 41 ; 142, 141) empties, of the quantity of fluid by which said second secondary chamber (42, 41 ; 142, 141) is emptied, from said second secondary chamber (42, 41 ; 142, 141) towards said first secondary chamber (41, 42 ; 141, 142), by means of said main chamber (9, 8 ; 109, 108).

25. The damper as claimed in claims 20 and 24, taken in combination, wherein that one of the two portions of the bore (49, 50 ; 149, 150) disposed on each side of the viscous restriction valve (51, 52 ; 151, 152) which slides in this bore, and which is opposite the transportation channel (61, 62 ; 161, 162) connecting said bore (49, 50 ; 149, 150) to one of the secondary chambers (41, 42 ; 141, 142), emerges, via complementary conduits (74, 75 ; 174, 175) into the working chamber (8, 9 ; 108, 109) connected, via a transfer circuit (63, 64 ; 163, 164), to the other of said secondary chambers (42, 41 ; 142, 141), thus producing, with said transportation channel (61, 62 ; 161, 162), a complementary circuit.

26. The damper as claimed in one of claims 23 to 25, wherein a working chamber (8, 9 ; 108, 109), associated with a secondary chamber (41, 42 ; 141, 142) via a transfer circuit (63, 64 ; 163, 164), fills at the same time as said secondary chamber (41, 42 ; 141, 142).

27. The damper as claimed in one of claims 23 to 26, wherein at least a portion of the transfer circuit (63, 64 ; 163, 164) is associated with a differential valve (67, 68 ; 167, 168) intended to close it when the secondary chamber (41, 42 ; 141, 142) associated with said transfer circuit (63, 64 ; 163, 164) empties.

28. The damper as claimed in claims 26 and 27, taken in combination, wherein a differential valve (67, 68 ; 167, 168) is closed through the action of the pressure of the fluid in the working chamber (9, 8 ; 109, 108) in which the transfer circuit (63, 64 ; 163, 164) associated with said differential valve (67, 68 ; 167, 168) emerges when said working chamber (9, 8 ; 109, 108) empties.

29. The damper as claimed in one of claims 27 or 28, wherein the differential valves (67, 68 ; 167, 168) of the transfer circuits (63, 64; 163, 164) of each of the two secondary chambers (41, 42 ; 141, 142) are combined with one another, one being in the closed position bearing on its seat while the other is in the open position.

30. The damper as claimed in one of claims 23 to 29, wherein a transfer circuit (63, 64 ; 163, 164) emerges into the secondary chamber (41, 42 ; 141, 142) with which it is associated via the transportation channel (61, 62 ; 161, 162) associated with said secondary chamber (41, 42 ; 141, 142).

31. The damper as claimed in claim 4, taken in combination with any of the preceding claims, wherein the main cylinder (5 ; 105), the main rod (3 ; 103), the secondary cylinder (39 ; 139) and the secondary rod (32 ; 132) have coincident axes.

32. The damper as claimed in claims 4 and 19, taken in combination, wherein the bore (49, 50 ; 149, 150) of a valve (51, 52 ; 151, 152) extends into the damping piston (4 ; 104) perpendicularly to the axis of the main rod (3 ; 103).

33. The damper as claimed in claim 31, taken in combination with one of claims 26 to 30, wherein the differential valves (67, 68 ; 167, 168) are disposed in the damping piston (4 ; 104) symmetrically relative to the viscous restriction valve(s) (51, 52 ; 151, 152) and perpendicularly to the axis of the main rod (3 ; 103).

34. An elastic-return strut with integral damping, of elasto-hydraulic type, in particular for controlling the alternated angular movements of the blades of a rotor of an aerodyne with rotary wing unit in the plane of rotation of said blades, comprising ;
- two rigid members (1, 2 ; 101, 102) each equipped with articulation means (84, 85, 86, 87 ; 184, 185, 186, 187) intended to connect one of the rigid members (1 ; 101) to a first part, such as a blade or a member for joining said blade to the boss of the rotor, and the other rigid member (2 ; 102) to a second part, such as said boss of the rotor;
- at least one elastic-return member (77 ; 216, 218) comprising a sleeve in an elastically deformable material adhering in a leaktight manner via its inner and outer lateral surfaces, respectively, between inner and outer rigid tubular sections (13, 78 ; 214, 215, 217, 212) respectively, substantially coaxial with respect to the axis of the strut and each integrally attached to one, respectively, of the two rigid members (1, 2 ; 101, 102), so that the sleeve (77 ; 216, 218) is deformed in shear, when the two rigid members (1, 2 ; 101, 102) are displaced relative to one another substantially according to the general axis of the strut and when the sleeve (77 ; 216, 218) exerts an elastic-return action on said rigid members (1, 2 ; 101, 102) which tends to bring them back into an initial relative position; and
- a hydraulic damper as claimed in one of claims 1 to 33, the main body (1 ; 101) of said damper forming one of the two rigid members, the damping piston (4 ; 104) of said damper being integrally attached to the other (2 ; 102) of said rigid members.

35. The strut as claimed in claim 34, wherein the secondary movable rod (32 ; 132) and the main movable rod (3; 103) are mounted, one on the articulation means connecting one of said rigid members to the first part, the other on the articulation means connecting the other of said rigid members to the second part.

36. The strut as claimed in one of claims 34 or 35, wherein a sleeve (77) adheres, via its inner surface, to the outer surface of a tubular wall (13) of the main body (1 ; 101) of the damper.

37. The strut as claimed in one of claims 34 or 35, wherein the strut comprises two elastic sleeves (216,218) adhering via their inner surface to the outer tubular surface of sections (212, 214) integrally attached to the main movable rod (103), and, via their outer surface, to the inner tubular surfaces of sections (215, 217) integrally attached to the main body (101) of the damper.

38. The strut as claimed in claim 37, wherein the elastic sleeves (216, 218) respectively at least partially delimit the compensation chamber (110) and the auxiliary chamber (106).

39. The strut as claimed in one of claims 37 or 38, wherein the secondary movable rod (132) is connected to the main movable rod (103) via at least one flexible elastic-return wall (211).

40. The strut as claimed in claim 39, wherein the flexible elastic-return wall (211) has a frustoconical form widening from a sheath (206), in which the secondary movable rod (132) is mounted, as far as the inner wall of a tubular section (212).
